(19) Europäisches Patentamt
European Patent Office
Office européen des brevets

(11) **EP 4 354 868 B1**

(12) **EUROPEAN PATENT SPECIFICATION**

(45) Date of publication and mention
of the grant of the patent:
**10.12.2025 Bulletin 2025/50**

(21) Application number: **22819172.2**

(22) Date of filing: **30.03.2022**

(51) International Patent Classification (IPC):
*H04N 19/31* (2014.01)      *H04N 21/845* (2011.01)
*H04N 21/2343* (2011.01)      *H04N 21/854* (2011.01)

(52) Cooperative Patent Classification (CPC):
**H04N 19/31; H04L 65/60; H04N 21/234327;**
**H04N 21/845; H04N 21/8456; H04N 21/85406**

(86) International application number:
**PCT/CN2022/083960**

(87) International publication number:
**WO 2022/257567 (15.12.2022 Gazette 2022/50)**

(54) **MEDIA DATA PROCESSING METHOD AND RELATED DEVICE**

MEDIENDATENVERARBEITUNGSVERFAHREN UND ZUGEHÖRIGE VORRICHTUNG

PROCÉDÉ DE TRAITEMENT DE DONNÉES MULTIMÉDIAS ET DISPOSITIF ASSOCIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.06.2021 CN 202110656768**

(43) Date of publication of application:
**17.04.2024 Bulletin 2024/16**

(73) Proprietor: **Tencent Technology (Shenzhen)**
**Company Limited**
**Shenzhen, Guangdong 518057 (CN)**

(72) Inventor: **HU, Ying**
**Shenzhen, Guangdong 518057 (CN)**

(74) Representative: **Novagraaf International SA**
**Chemin de l'Echo 3**
**1213 Onex, Geneva (CH)**

(56) References cited:
**CN-A- 101 518 087        CN-A- 106 664 446**
**CN-A- 112 565 815        CN-A- 112 804 256**
**GB-A- 2 506 911          US-A1- 2013 195 172**
**US-A1- 2023 017 002**

## Description

FIELD OF THE TECHNOLOGY

The present disclosure relates to the technical field of computers, and particularly relates to media data processing.

BACKGROUND OF THE DISCLOSURE

Temporal layer partitioning is technically supported in related video coding technology, and different temporal layers within a track are further identified in encapsulating techniques for a system layer. These encapsulating techniques only consider scenarios in which a video bitstream is encapsulated as one track.

CN112565815A describes a file encapsulation method, a file transmission method, a file decoding method and related equipment. The file encapsulation method includes: obtaining an encoded target video and time domain level information of a sample determined by the target video in an encoding process; encapsulating the encoded target video to generate a first encapsulation file, the first encapsulation file including time domain level information of the sample; and sending the first encapsulation file to a first device.

SUMMARY

The present invention is provided in the independent claims. Advantageous embodiments are provided in the dependent claims.

Embodiments of the present disclosure support a content generating device to encapsulate the media frames of the multiple temporal layers into different tracks. During the encapsulation, the description box of each track records the temporal-track signaling information. Thereby, tracks of different temporal layers are associated, information of the temporal layer(s) in the track is indicated, a base track is marked, and information of a strategy for combining tracks having multiple temporal layers is indicated. A content consuming device can select the appropriate temporal layer according to the description box in the track, and combine different tracks for decoding and displaying. Flexibility of multi-track encapsulation is ensured, and computation resources are saved to the maximum extent.

BRIEF DESCRIPTION OF THE DRAWINGS

Figure 1 shows a flowchart of video processing according to an embodiment of the present disclosure.

Figure 2 shows a schematic flowchart of a method for processing media data according to an embodiment of the present disclosure.

Figure 3 shows a schematic diagram of a coding unit according to an embodiment of the present disclosure.

Figure 4 shows a schematic diagram of categorization among temporal layers according to an embodiment of the present disclosure.

Figure 5 shows a schematic flowchart of a method for processing media data according to an embodiment of the present disclosure.

Figure 6a shows a schematic diagram of encapsulating multiple temporal layers into multiple tracks according to an embodiment of the present disclosure.

Figure 6b shows a schematic diagram of encapsulating multiple temporal layers into multiple tracks according to an embodiment of the present disclosure.

Figure 7 shows a schematic flowchart of a method for processing media data according to an embodiment of the present disclosure.

Figure 8 shows a schematic structural diagram of an apparatus for processing media data according to an embodiment of the present disclosure.

Figure 9 shows a schematic structural diagram of an apparatus for processing media data according to an embodiment of the present disclosure.

Figure 10 shows a schematic structural diagram of a computer device according to an embodiment of the present disclosure.

DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

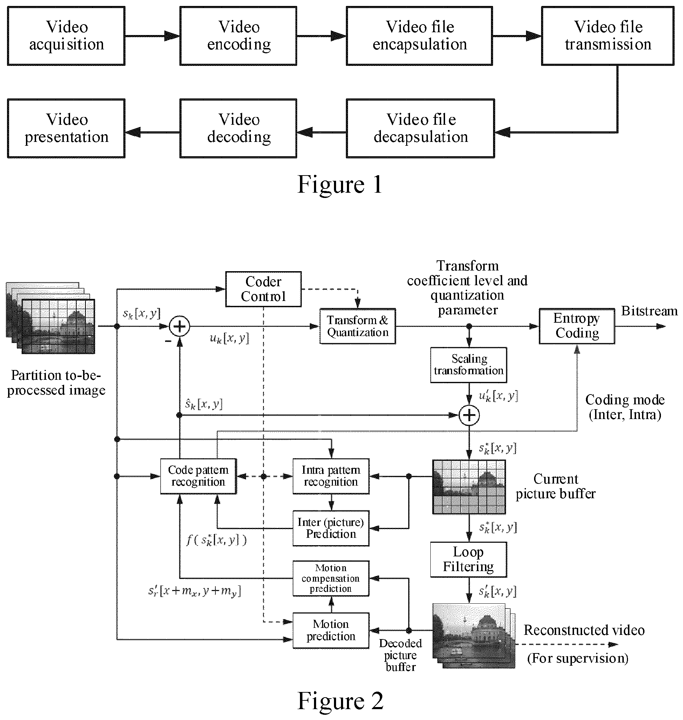

Embodiments of the present disclosure concern technology of media data processing. Media data (also called multimedia data) refers to composite data formed by data of media, such as texts, graphs, images, sounds, animations, and dynamic images, which are mutually associated in content. The media data mentioned in embodiments of the present disclosure mainly includes audio data formed by sounds and video data formed by images plus sounds. In embodiments, the video data is taken as a main example of the media data when illustrating processing on the media data in detail, and a case in which the media data is the audio data may refer to these embodiments. Herein the relevant processing on the media data mainly includes acquiring media data, encoding the media data, encapsulating the media data as a file, transmitting the media data file, decoding the media data, and finally presenting the data. In a case that the video data serves as the media data, complete processing on the video data may be as shown in Figure 1. Specifically, the processing comprises video acquisition, video encoding, video file encapsulation, video transmission, video file decapsulation, video decoding, and final video presentation.

The video acquisition is configured for converting an analog video into a digital video and storing the digital video as a digital video file. That is, a video signal may be converted into binary digital information in the video acquisition, and the binary information is a binary data stream and may be called a code stream or a bitstream of the video signal. The video encoding is configured for converting an original file of a video format into a file of another video format through compression. Herein generation of video media content refers to capturing a real scene by a camera or generating a scene of screen content by a computer. The video signal may be categorized into two types according to a manner of acquisition, i.e., shot by a camera or generated by a computer. Different types have different statistical characteristics, and hence correspond to different compression/coding modes. At present, mainstream video coding techniques, for example, High Efficiency Video Coding (HEVC, international video coding standard HEVC/H.265), versatile video coding (VVC, international video coding standard VVC/H.266), and audio video coding standard (AVS, China national video coding standard) or AVS3 (third-generation video coding standard proposed by the AVS standard group), adopt a hybrid coding framework to perform following operations and processing on an original video signal which is inputted. Details may refer to Figure 2.

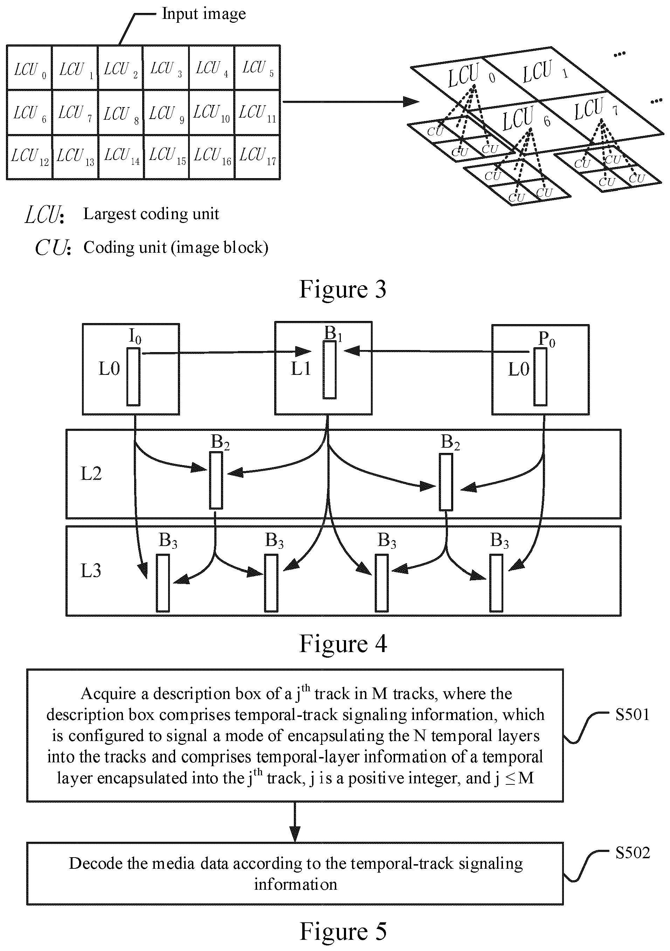

(1) Block partition structure. An input image (such as a media frame in video data) is partitioned into several processing units, which do not overlap with each other, according to a size of the image. Each processing unit is subject to similar compression operation, and is called as a coding tree unit (CTU) or a largest coding unit (LCU). Generally, starting from the largest coding unit, the CTU is dividable and can be recursively partitioned into one or more basic coding units, each of which is called a coding unit (CU). Each CU is the most basic element in coding. Hereinafter various coding modes applicable to each CU are described. A relationship between the LCU (or the CTU) and the CUs may as shown in Figure 3.

(2) Predictive coding. The predictive coding includes intra prediction, inter prediction, and the like. A residual video signal can be obtained through predicting the original video signal based on a reconstructed video signal which is selected. An encoding terminal needs to select the most suitable mode for the current CU among multiple candidate predictive coding modes, and inform a decoding terminal of the selected mode.

(2.1) Intra (picture) Prediction. The prediction signal is from an encoded, reconstructed region in the same image.

(2.2) Inter (picture) Prediction. The prediction signal is from an encoded image which is different from the current image (also called a reference image).

(3) Transform & Quantization. The residual video signal is converted into a transform domain through the transform, such as discrete Fourier transform (DFT) and discrete cosine transform (DCT, a subset of DFT), which is represented transform coefficient(s). The signal in the transform domain is further subject to the lossy quantization, in which some information is missing, such that the quantized signal facilities compressing expression.

In some video coding standards, there may be more than one candidate transform modes. Hence, an encoding terminal needs select one transform for the current CU and inform the decoding side of the selected transform. Fineness of the quantization is usually determined by a quantization parameter (QP). A larger QP indicates that a coefficient within a larger range would be quantized to the same output, and hence usually leads to greater distortion and a lower bitrate. Conversely, a smaller QP indicates that the coefficient within a smaller range would be quantized to the same output, and hence usually leads smaller distortion and a upper bitrate.

(3) Entropy Coding or Statistical Coding. The quantized transform-domain signal is subject to statistical compression coding according to occurrence of each value, and finally a compressed binary (0 or 1) code stream is outputted. Meanwhile, other information generated due to the coding, such as a selected mode and a motion vector, is also subject to entropy coding to reduce a bitrate.

The statistical coding is a lossless coding mode and can reduce a necessary bitrate for expressing the same signal effectively. Conventional statistical coding modes include variable length coding (VLC) and content adaptive binary arithmetic coding (CABAC).

(5) Loop Filtering. An encoded image is subject to inverse quantization, inverse transformation, and prediction compensation (which are inverse operations of (2) to (4)) to obtain a reconstructed decoded image. Partial information in the reconstructed image is different form the corresponding information in the original image due to the quantization, which is distortion. The reconstructed image is subject to filtering, such as deblocking, sample adaptive offset (SAO), or adaptive loop filtering (ALF), and thereby a degree of the distortion can be effectively reduced. The reconstructed image after the filtering would serve as a reference for subsequent encoded images, i.e. are configured to predict future signals, and thus the filtering is also called loop filtering or filtering in a coding loop.

Figure 2 shows a basic flow in a video coder. A $k^{th}$ CU (marked as $S_k[x, y]$) is taken as an example for illustration in Figure 2. k is a positive integer greater than or equal to 1 and less than or equal to a total quantity of CUs in a current inputted image. $S_k[x, y]$ represents a pixel having the coordinate [x, y] in the $k^{th}$ CU, where x represents the horizontal coordinate of the pixel, and y represents the vertical coordinate of the pixel. $S_k[x, y]$ is subject to an optimal processing among motion compensation, intra prediction, or the like to obtain a prediction signal $\widehat{S_k}[x, y]$. $S_k[x, y]$ is subtracted from $\widehat{S_k}[x, y]$ to obtain a residual signal $U_k[x, y]$, and then the residual signal $U_k[x, y]$ is subject to transform and quantization. The quantized data is outputted and processed in two paths: one path is transmitting the data to an entropy coder for entropy encoding, and the encoded code stream is outputted to a buffer for storage before transmission; and the other path is inverse quantization and inverse transformation, which obtains a signal $U'_k[x, y]$. The signals $U'_k[x, y]$ and $\widehat{S_k}[x, y]$ are summed to obtain a new predicted signal $S^*_k[x, y]$, and $S^*_k[x, y]$ is transmitted to and stored in a buffer for the current image for storage. $S^*_k[x, y]$ is subject to intra prediction to obtain $f(S^*k[x, y])$, and $S^*_k[x, y]$ is subject to loop filtering to obtain $S'_k[x, y]$. $S'_k[x, y]$ is transmitted to and stored in a buffer for the decoded image, so as to generate a reconstructed video. $S'_k[x, y]$ is subject to motion-compensation prediction to obtain $S'_r[x+m_x, y+m_y]$, which represents a reference block. $m_x$ and $m_y$ represent horizontal and vertical components, respectively, of a motion vector.

After encoding the media data, the encoded data steam needs to be encapsulated and transmitted to a user. The video file encapsulation refers storing the coded, compressed video and audio into a file according to an encapsulating format (or a container, or a file container). Common encapsulating format includes an audio video interleaved (AVI) format or an ISO based media file format (ISOBMFF, a media file format based on an international standard organization (ISO) standard). The ISOBMFF is an encapsulating standard for media files, and a most typical ISOBMFF file is a moving picture experts group 4 (MP4) file. Embodiments of the present disclosure mainly focus on improvements of ISOBMFF boxes. In one embodiment, an audio code stream and a video code stream are encapsulated into a file container according to the file format, such as the ISOBMFF, to form an encapsulation file. Samples of the encapsulation file serve as units of the encapsulation, and an encapsulation file comprises multiple samples. That is, during encapsulation of the file, on media frame usually serves as one sample to generate the encapsulation file. In a case that the media data is video media, the media frame is a video frame. In a case that the media data is audio media, the media frame is an audio frame. Namely, the encapsulation file of the video media comprises multiple video frames, and the encapsulation file of the audio media comprises multiple audio frames. Herein it is taken as example that the media data is the video media, and a sample in the encapsulation file is a media frame of the video media.

After the encapsulation, the file is transmitted to a user terminal through the video transmission, and the user terminal may perform inverse operations such as decapsulation and decoding, so as to obtain final video content for display. The encapsulation file can be transmitted to the user terminal through a transmission protocol, which is, for example, dynamic adaptive streaming over HTTP (DASH, which is an adaptive bitrate stream technique). The DASH enables transmission of high-quality streaming media via the Internet through conventional HTTP network servers. In the DASH, media segments are described by media presentation description (MPD, signaling describing media presentation in the DASH), and a combination of one or more media components, such as a video file having a certain resolution, can be treated as a representation (Representation). Multiple representations contained in the file can be treated as an adaptation set (Adaption Set, a set of video streams), and the DASH may comprise one or more adaptation sets.

The file decapsulation at the user terminal is an inverse process of the file encapsulation. The user terminal may decapsulate the encapsulation file according to a requirement on the file format of the encapsulation, in order to obtain an audio code stream and a video code stream. The decoding at the user terminal is an inverse process of the coding. The user terminal may decode the audio code stream to restore audio content. On a basis of the foregoing encoding process, it is appreciated that after a decoder at the decoding side acquires the compressed code stream of each CU, the decoder performs entropy decoding to obtain various information on the mode(s) and the quantized transformation coefficient(s), and all coefficients are subject to inverse quantization and inverse transformation to obtain the residual signal. On the other hand, the prediction signal corresponding to the CU can be obtained according to the information on the coding mode. The residual signal and the prediction signal are summed to obtain a reconstructed signal. Finally, the reconstructed values in the decoded image are subject to loop filtering to generate a final output signal.

A temporal layering technique in video coding is further involved. Such technique can categorize different media frames into different temporal layers according to dependency among the media frames in decoding. Specifically, a media frame categorized into a lower layer through the temporal layering refers to no media frame in a higher layer when being decoded. Reference is made to Figure 4, in which arrows represent the dependency in decoding. An arrow pointing from a frame $I_0$ to a frame $B_1$ indicates that that the frame $B_1$ needs to refer to the frame $I_0$ when being decoded. That is, decoding of the frame $B_1$ needs to depend on decoding of the frame $I_0$. A relationship among the remaining frames can be deduced by analogy. In Figure 4, the inter-frame dependency indicated by the arrows suggests that all media frames are categorized into four temporal layers, i.e., L0 to L3, according to the inter-frame dependency. In each temporal layer, the media frames do not depend on media frames of higher layer(s) when being decoded. Herein the lower and higher temporal layers as mentioned are relative concepts. Taking the four temporal layers L0 to L3 as shown in Figure 4 as an example, the temporal layers L1 to L3 are higher than the temporal layer L0. With respect to the temporal layer L1, the temporal layer L3 is a higher layer, and the temporal layer L0 is a lower layer.

As shown in Figure 4, the types of media frames mainly include an I frame (Intra Slice), a B frame and a P frame. The I frame is also called a key frame, which is subject to intra-frame compression, and refers to the information of itself when being decoded. The B frame is a bidirectional predictive frame, and refers to both a previous decoded frame and a subsequent to-be-decoded frame when being decoded. The P frame is a forward predictive frame, namely, the P frame refers to information of a previous relevant frame when being decoded. In Figure 4, the Arabic numeral subscripts in the signs denoting the I frame, the B frame and the P frame represent corresponding temporal layers. Among media frames of all the temporal layers, a media frame categorized in a lower temporal layer needs to not depend on those in the higher temporal layers when being decoded during decoding. Hence, a media frame in the lowest temporal layer (such as the temporal layer L0) does not depend on any other temporal layer when being decoded, namely, it can be independently decoded and displayed. Based on characteristics of the I frames, the P frames, and the B frames in decoding, it is inevitable that the media frame categorized into the lowest temporal layer comprises the I frame.

A requirement on categorizing the media frames into the temporal layers is that a media frame in a lower temporal layer does not refer to media frame(s) of the higher temporal layers when being decoded. As shown in Figure 4, it is assumed that the media frames in the video data comprise media frames in four temporal layers, i.e., L0 to L3. The arrows in Figure 4 represent the dependency among the media frames in decoding. That is, the arrow from the frame $I_0$ to the frame $B_1$ represents that the frame $B_1$ in the temporal layer L1 refers to the frame $I_0$ in the temporal layer L0 when being decoded. The frame $B_1$ further refer to the frame $P_0$ in the temporal layer L0 when being decoded. The first frame $B_2$ in the temporal layer L2 refers to the frame $I_0$ in the temporal layer L0 and the frame $B_1$ in the temporal layer L1 when being decoded. The second frame $B_2$ in the temporal layer L2 refers to the frame $B_1$ in the temporal layer L1 and the frame $P_0$ in the temporal layer L0 when being decoded. The first frame $B_3$ in the temporal layer L3 refers to the first frame $B_2$ in the temporal layer L2 and the frame $I_0$ in the temporal layer L0 when being decoded. The second frame $B_3$ in the temporal layer L3 refers to the frame first $B_2$ in the temporal layer L2 and the frame $B_1$ in the temporal layer L1 when being decoded. The third frame $B_3$ in the temporal layer L3 refers to the frame $B_1$ in the temporal layer L1 and the second frame $B_2$ in the temporal layer L2 when being decoded. The fourth frame $B_3$ in the temporal layer L3 refers to the second frame $B_2$ in the temporal layer L2 and the frame $P_0$ in the temporal layer L0 when being decoded.

At present, the AVS3 video coding technology can support temporal-layer partition (or called temporal layering), and system-layer encapsulation of the AVS3 signals different temporal layers within a track. When the media frames are encapsulated through the temporal layering in conventional technology, a quantity of the temporal layers in the video code stream is signaled by using a temporal-layer number field (temporal_layer_num) of the encapsulation file in correspondence to the track in which the media frames are encapsulated. Additionally, the temporal layer(s) to which media frames in the video code stream belong is signaled by using a temporal-layer identifying field (temporal_layer_id) in correspondence to the track in which the media frames are encapsulated. The track refers to a series of samples which have temporal attributes and are encapsulated based on the ISO basic media file format (ISOBMFF), and may be, for example, a video track. The video track is obtained through encapsulating a code stream, which is generated after all frames are coded by the video encoder, according to the ISOBMFF specifications. In conventional technology, AVS3 decoder configuration record (namely, a description box) provides configuration information for decoding in the AVS3 coding mode. The decoding configuration information can be represented as configuration information 1, which is illustrated as follows.

```
class Avs3DecoderConfigurationRecord{//AVS3 Decoder configuration record
        unsigned int(8) configuration Version; //8-bit unsigned integer for a version of the
        configuration
        unsigned int(8) profile_id; //Profile identifier
        unsigned int(8) level_id; //Level identifier
        bit(6) reserved ='111111'b; //Reserved fields, a general field requires an integer
        number of bytes, which needs to be supplemented with reserved bits
        unsigned int(2) chroma_format; //Chroma format
        bit(5) reserved = '11111'b; //
        unsigned int(3) encoding_precision; //Encoding precision
        bit(4) reserved = '1111'b; //
        unsigned int(4) frame_rate_code; //Encoding frame rate
        bit(6) reserved ='111111'b; //
        unsigned int(2) library_indication; //Library indication
        bit(4) reserved = '11111'b; //
        unsigned int(3) temporal _layer_num; //Temporal-layer number field
          }
```

Thus, the temporal-layer partition is supported by the AVS3 video coding, and different temporal layers in the track are signaled in system-layer encapsulation of the AVS3 system. Nevertheless, conventional system-layer encapsulation only considers using a single track to encapsulate the video bitstream. In a case that a user encapsulates a video bitstream containing different temporal layers into multiple tracks of a video file, it is difficult for conventional technology to provide adequate information for supporting another user to reconstruct the video bitstream selectively via different combinations of the tracks when consuming the video bitstream.

In view of the above, a method for processing media data is provided according to embodiments of the present disclosure, and can support multi-track file encapsulation in the temporal-layer partition of the AVS3. In a case that the media data is video data, the method are specifically implemented as follows.

First, during the video encoding, a content generating device determines temporal layers of different media frames of the video data according to an inter-frame dependency among these media frames.

Second, a video bitstream is encapsulated into multiple different tracks according to the temporal layers of the media frames, and information on the specific temporal layer(s) contained in each track of a file is signaled in such track. Such information comprises an identifier of the temporal layer, a frame rate corresponding to the temporal layer, a bitrate information corresponding to the temporal layer, or the like.

Third, a track containing the lowest temporal layer is marked as a base track, and the track(s) containing the remaining higher layer(s) refer to the base track through the "tlrf" box. Information on a strategy of combining multiple temporal layers is provided in file encapsulation of the base track.

Fourth, at a side of user consumption, a content consuming device at which a user is located selects one or more tracks corresponding to the required temporal layer(s) according to a capability of the device and the information on the strategy of combining multiple temporal layers, decapsulate the track(s), and then reconstruct the tracks into a bitstream for decoding. Thereby, the tracks in the files are flexibly selected, and computation resources are saved in the decoding.

Several descriptive fields are added in the system layer according to embodiments of the present disclosure, in order to support the foregoing steps. Extensions on the ISOBMFF box are taken as an example, in which relevant fields are defined to support the multi-track file encapsulation for the AVS3 temporal-layer partition. Hereinafter the method for processing media data is described in detail in conjunction with Figure 5. The method for processing media data may be executable on any content consuming device that consumes media content, and the content consuming device includes a terminal device (or a server) at which a user consuming the media content is located. The media data comprises multiple media frames, which are partitioned into N temporal layers and are encapsulated into M tracks. M and N each is a positive integer greater than 1.

As shown in Figure 5, the method specifically includes steps S501 and S502.

In step S501, a description box of a $j^{th}$ track in the M tracks are acquired, where the description box comprises temporal-track signaling information.

The temporal-track signaling information is configured to signal a mode of encapsulating the N temporal layers into the tracks, and comprises temporal-layer information of a temporal layer encapsulated into the $j^{th}$ track. j is a positive integer, and $j \leq M$.

The description box acquired by a content consuming device is generated through a content generating device encoding and then encapsulating the media data. When encapsulating the media data, the content generating device may encapsulate the media frames of different temporal layers into multiple tracks based on the temporal layer corresponding to each media frame. The media data comprises multiple media frames, and the multiple frames are partitioned into N temporal layers. In such case, the multiple media frames may be encapsulated into M tracks, and M and N are both positive integers. The M tracks which encapsulate the multiple media frames may be categorized into base tracks and non-base tracks according to characteristics of the media frames during the decoding. The base track refers to that the media frames encapsulated in such track can be independently decoded, that is, these media frames do not refer to media frames in another track when being decoded. Hence, when the media data is video data, the media frames encapsulated in the base track comprises an I frame inevitably. As discussed above, the media frames categorized into the lowest temporal layer include the I frame inevitably. Hence, it is further inevitable that the temporal layer(s) encapsulated in the base track comprises the lowest temporal layer.

Assuming the media data is video data, when the content generating device is required to transmit the video data to a user side for consumption and displaying, the content generating device may determine the temporal layers of different media frames according to the inter-frame dependency, which is among the media frames during video coding. Then, the content generating device may encapsulate the video bitstream into multiple tracks according to the temporal layers, and specific information on the temporal layer(s) can be signaled in each file track via description box(es). Correspondingly, during consumption at the user side, the temporal layers may be selected based on a decoding capability of a related terminal device, and thus the decoding computation resources can be saved. In one embodiment, in a case that the multiple media frames comprised in the media data belong to the N temporal layers, the content generating device encapsulates the media frames of the N temporal layers into one or more tracks, and generates corresponding description box(es) in each track after. The content consuming device (such as the terminal device at the user side) can determine the mode of the encapsulating the media frames of the N temporal layers at the content generating device, based on what the description box(es) record, and then selects media frames in appropriate temporal layer(s) for decoding and displaying.

Herein the foregoing description box is implemented by adding temporal-track information into a conventional ISOBMFF box, so as to achieve the multi-track file encapsulation which supports the temporal-layer partition in the AVS3. Adding the temporal-track information into the ISOBMFF box comprises adding one or more relevant fields into the ISOBMFF box as extensions. Herein the description box of the $j^{th}$ track in the M tracks is taken as an example for detailed illustration of the relevant fields as expansions in the description box. The relevant fields may be shown as the configuration information 2, which is illustrated as follows.

```
class Avs3DecoderConfigurationRecord{

    …

        unsigned bit(1) multi_temporal_track_flag;

if(temporal_layer_num > 1||multi_temporal_track_flag == 1){

        TemporalLayerInfoBox(temporal_layer_num, multi_temporal_track_flag);

}

        }

        class TemporalLayerInfoBox extends FullBox('tlit', temporal_layer_num,

multi_temporal_track_flag) {

for(i=0; i<temporal_layer_num; i++){

        unsigned int(8) temporal_layer_id[i];

}

if(multi_temporal_track_flag == 1){

        unsigned int(1) base_track_flag;

        bit(7) reserved;

        if(base_track_flag == 1){

                unsigned int(8) total_temporal_layer_num;

                for(i=0; i< total_temporal_layer_num; i++){

                        unsigned int(3) temporal_layer_id[i];

                        unsigned int(4) frame_rate_code[i];

                        unsigned int(18) temporal_bit_rate_lower[i];

                        unsigned int(12) temporal_bit_rate_upper[i];

                        bit(3) reserved;

                }

                unsigned int(8) total_temporal_track_num;

                for(i=0; i< total_temporal_track_num; i++){
```

```
                    unsigned int(32) track_ID [i];

                    unsigned int(1) is_output_track_flag[i];

                    unsigned int(1) is_alternative_track_flag [i];

                        if(is_alternative_track_flag [i]){

                            unsigned int(32) alternate_track_ID;

                        }

                    bit(6) reserved;

                }

            }

        }
    else{

            for(i=0; i< temporal_layer_num; i++){

                unsigned int(3) temporal_layer_id[i];

                unsigned int(4) frame_rate_code[i];

                unsigned int(18) temporal_bit_rate_lower[i];

                unsigned int(12) temporal_bit_rate_upper[i];

                bit(3) reserved;

            }

        }

    }
```

The fields in the temporal-track signaling information comprised in the description box are: a multi-temporal-track identifying field (multi_temporal_track_flag), a temporal-layer total-number field (total_temporal_layer_num), the temporal-layer number field, a temporal-layer identifying field (temporal_layer_id[i]), a frame-rate field (frame_rate_code[i]), a lower bitrate field (temporal_bit_rate_lower[i]), an upper bitrate field (temporal_bit_rate_upper[i]), a base-track identifying field (base_track_flag), a track identifiying field (track_ID [i]), a priority decoding-and-presenting field (is_output_track_flag[i]), an alternative-track field (is_alternative_track_flag [i]), and an alternative-track identifying field (alternate_track_ID), which are in the configuration information 2. The temporal-layer identifying field (temporal_layer_id[i]), the frame-rate field (frame_rate_code[i]), the lower bitrate field (temporal_bit_rate_lower[i]) and the upper bitrate field (temporal_bit_rate_upper[i]) among the foregoing fields are configured to signal specific temporal-layer information in the corresponding track (such as the $j^{th}$ track).

Herein the semantics and grammar involved in the configuration information 2 are described in detail.

(1) The multi-temporal-track identifying field (multi_temporal_track_flag) is configured to signal the mode of encapsulating the N temporal layers modes of the media data into the tracks. The mode includes: a multi-track encapsulating mode and a single-track encapsulating mode. The multi-temporal-track identifying field being a first value indicates that the multiple media frames of the N temporal layers are encapsulated into multiple tracks. The multi-temporal-track identifying field being a second value indicates that the multiple media frames of the N temporal layers are encapsulated into a single track. Specifically, the first value may be 1, and the second value may be 0.

(2) The temporal-layer number field (temporal_layer_num) is configured to indicate a quantity of temporal layers in the current track (the $j^{th}$ track). As shown in the configuration information 2, the temporal-layer number field having a value greater than 1 indicates that the multiple temporal layers having a quantity equal to such value are encapsulated in the $j^{th}$ track. The temporal-layer number field having a value equal to 1 indicates that only one temporal layer of the media data is encapsulated into the $j^{th}$ track. The content consuming device may read values of the relevant fields from the description box during the decoding, and hence peforms the decoding and the displaying according to these relevant fields. The description box is of a "tlin" type.

(3) The description box in the $j^{th}$ track comprises specific temporal-layer information of the $j^{th}$ track. The temporal-layer information comprises the temporal-layer identifying field (temporal_layer_id[i]), which is configured to indicate an identity document (ID, a unique identity) of a single temporal layer. Each of the N temporal layers corresponds to one temporal_layer_id, and such the temporal-layer identifying field can indicate an identity of an $i^{th}$ temporal layer in the temporal layers encapsulated into the $j^{th}$ track. According to the configuration information 2, the identity of the $i^{th}$ temporal layer in the temporal layers encapsulated into the $j^{th}$ track is recorded in the temporal_layer_id[i] in the description box of the $j^{th}$ track.

In addition, the temporal-layer information in the $j^{th}$ track further comprises the frame-rate field (frame_rate_code[i]) and bitrate information. The frame-rate field is configured to signal a frame rate accumulated by all media frames below the $i^{th}$ temporal layer (namely, the temporal layer signaled by the temporal_layer_id[i]). The bitrate information is configure to signal a bitrate accumulated by all media frames below the $i^{th}$ temporal layer (namely, the temporal layer signaled by the temporal_layer_id[i]). The bitrate information includes the lower bitrate field (temporal_bit_rate_lower[i]) configured to signal the lower 18 bits of such bitrate, and further includes the upper bitrate field (temporal_bit_rate_upper[i]) which is used for indicating the upper 12 bits of such bitrate. Herein the accumulation is appreciated as follows. Assuming that temporal_layer_id[i]=3, the corresponding frame rate (or bitrate) is the frame rate (or bitrate) considering all frames which correspond to the temporal_layer_id[i] smaller than 3.

Reference is made to the configuration information 2. In a case that the multi-temporal-track identifying field in the description box is equal to 0, namely, the multiple media frames of the N temporal layers in the media data are encapsulated into a single track, the content consuming device may read values of the temporal-layer identifying field, the frame-rate field, the lower bitrate field, and the upper bitrate field, and thus determine the corresponding frame rate and the corresponding bitrate accumulated below each temporal layer. Thus, the content consuming device can select the media frames of all or a part of the temporal layers, for decoding and displaying, according to its own decoding performances.

(4) When the multi-temporal-track identifying field is equal to 1, it indicates that the multiple media frames of the N temporal layers in the media data are encapsulated into multiple different tracks. In such case, before reading the values of the frame-rate field, the lower bitrate field, and the upper bitrate field to determine the corresponding frame rate and the corresponding bitrate accumulated below each temporal layer, the content consuming device may read values of other fields, which include all or a part of the following fields in items 4.1 to 4.4.

(4.1) Base-track identifying field (base_track_flag) comprised in the temporal-track signaling information

The base-track identifying field is configured to signal whether the $j^{th}$ track is a base track or not. The base-track identifying field being a first value indicates that the $j^{th}$ track is the base track, and the base-track identifying field being a second value indicates that the $j^{th}$ track is a non-base track. The media frames encapsulated in the base track are independently decoded. The first value may be 1, and the second value may be 0. Reference is made to the foregoing configuration information 2. When the content generating device performs multi-track encapsulation on the media frames of the N temporal layers, the corresponding frame rate and the corresponding bitrate accumulated below each temporal layer are recorded in the base track. Namely, values are assigned to the frame-rate field, the lower bitrate field, and the upper bitrate field only in the description box of the base track. The frame-rate field, the lower bitrate field, and the upper bitrate field are null in the description box of the non-base track.

In one embodiment, when the content consuming device reads the base-track identifying field from the description box of the j$^{th}$ track by, a value of 1 indicates that the j$^{th}$ track is the base track. In such case, the content consuming device further obtains values of the frame-rate field, the lower bitrate field, and the upper bitrate field from the description box of the j$^{th}$ track, and thereby determines the corresponding frame rate and the corresponding bitrate accumulated below each temporal layer.

(4.2) Temporal-layer total-number field (total_temporal_layer_num)

The temporal-layer total-number field is configured to signal the total quantity of temporal layers which corresponds to all tracks in a current file, that is, configured to signal the total number of the temporal layers encapsulated into the M tracks. It is assumed that the multi-track encapsulation mode is applied to the temporal layers, and the j$^{th}$ track is the base track. In such case, the content generating device may record the identity of each temporal layer in the description box of the base track based on the temporal-layer total-number field, when determining the value of the temporal-layer identifying field (temporal_layer_id[i]) in such description box.

(4.3) Reference-type identifying field ("tlrf")

The reference-type identifying field is configured to define a reference relationship between the base track (or a track of a base temporal layer) and the non-base track (or a track of a high temporal layer) when the multi-track encapsulation mode is applied to multiple temporal layers. The track of the base temporal layer has the ID of the lowest temporal layer, and there is only one track of the base temporal layer in each file. The remaining tracks containing various temporal layers are tracks of the high temporal layer.

The track of the high temporal layer refers to the track of the base temporal layer, on which it depends when being decoded, through a track reference box. Corresponding track reference-type boxes are added into the track reference box of the upper temporal layer track. A current base track (or called the current track of the base temporal layer) is signaled in the track reference-type boxes through track_IDs. The reference between the non-base track and the base track is identified through the corresponding reference-type identifying field (reference_type) in the track reference-type boxes. Such field is defined as "tlrf".

The "tlrf" indicates that a target of the reference is the track of the base temporal layer.

That is, in a case tha the content consuming device reads the base-track identifying field having a value of 0 from the description box of the j$^{th}$ track, it indicates that the j$^{th}$ track is the non-base track. In such case, the j$^{th}$ track further comprises the track reference box, and the track reference box comprises the track reference-type box. The track reference-type box comprises the track identifying field and the reference-type identifying field. The track identifying field is configured to store an identity of the base track, and the reference-type identifying field is configured to signal that a target of the reference is the base track. It is appreciated that in the case that the j$^{th}$ track is the non-base track, the values of the frame-rate field, the lower bitrate field, the upper bitrate field are all null in the description box of the non-base track. In such case, the content consuming device cannot obtain the values of the frame-rate field, the lower bitrate field, and the upper bitrate field through the description box of the j$^{th}$ track, and accordingly cannot determine the frame rate and the bitrate accumulated below each temporal layer. Therefore, the content consuming device may refer the non-base track (namely, the j$^{th}$ track) to the base track through the reference-type identifying field in the track reference-type box, which is in the track reference box of the j$^{th}$ track, and obtain the values of the frame-rate field, the lower bitrate field and the upper bitrate field of the base track.

(4.4) The temporal-track signaling information comprises information on a strategy of combining tracks, and such information includes a track identifying field (track_ID [i]), a decoding-and-presentation priority field (is_output_track_flag [i]), an alternative-track field (is_alternative_track_flag [i]), and an alternative-track identifying field (alternate_track_ID).

The track identifying field is configured to signal an identity (ID) of the track containing a part of the temporal layers, and each track in the M tracks corresponds to one track_ID.

The decoding-and-presentation priority field is configured to indicate whether the j$^{th}$ track (namely, the current track) is a track has a priority during decoding and presentation. The decoding-and-presentation priority field having a first value indicates that the j$^{th}$ track has the priority when being decoded and presented. The decoding-and-presentation priority field having a second value indicates that the j$^{th}$ track has no priority when being decoded and presented. The first value may be 1, and the second value may be 0.

The alternative-track field is configured to signal whether the j$^{th}$ track (namely, the current track) is an alternative track for another track in the M tracks. The alternative-track field having a first value indicates that the j$^{th}$ track is the alternative track of another track in the M tracks. The alternative-track field having a second value indicates that the j$^{th}$ track is not the alternative track of any track in the M tracks. The first value may be 1, and the second value may be 0.

The alternative-track identifying field is configured to signal an identity of the track for which the j$^{th}$ track (namely, the current track) serves as an alternative track.

In view of the foregoing illustration of the grammar and the semantics in the configuration information 2, when the multiple media frames in the media data belong to N different temporal layers, the content generating device may encapsulate the multiple media frames of the media data in the following two modes.

In the first mode, the media frames of the N temporal layers are encapsulated into a single track. In such case, after acquiring the encapsulation file for the media data, the content consuming device can read the layer identifying field, the frame-rate field, the lower bitrate field, and the upper bitrate field from the description box of the single track in which encapsulating the media frames of the N temporal layers, and thereby determine the identity of the $i^{th}$ temporal layer in the N temporal layers, the corresponding frame rate, and the correspondingly bitrate. Accordingly, the content consuming device can select and decode all or a part of the media frames in the temporal layers according to its own decoding capability, that is, perform step S502.

In the second mode, the media frames of the N temporal layers are encapsulated into multiple different tracks. When encapsulating the media frames in the multi-track encapsulating mode, the content generating device records a strategy of combining the temporal layers encapsulated in the tracks, and the corresponding frame rate and the corresponding bitrate accumulated by all media frames below each temporal layer, in the base track. The content generating device further refers other tracks to the base track through the reference-type identifying field. Thereby, the content consuming device can select and decode all or a part or the media frames according to its own decoding capability through relevant information recorded in the base track, that is, perform step S502.

In step S502, the media data is decoded according to the temporal-track signaling information.

After acquiring the description box in the $j^{th}$ track, the content consuming device may decode the media data according to the temporal-track signaling information in the description box. Specifically, the content consuming device may reserve the temporal layer(s), which match a decoding performance of a decoder, in the N temporal layers according to the temporal-track signaling information and the decoding performance, and then decode and present the media frames of the reserved temporal layer. The content consuming device reserving the temporal layer matching the decoding performance in the N temporal layers according to the temporal-track signaling information and the decoding performance may be implemented as follows. In one embodiment, since the temporal-track signaling information comprises the multi-temporal-track identifying field, the temporal-layer identifying field, the frame-rate field, and the bitrate information which comprises the lower bitrate field and the upper bitrate field, the content consuming device can obtain the value of the multi-temporal-track identifying field in the temporal-track signaling information, and the multi-temporal-track identifying field having the second value indicates that the media frames of the N temporal layers are encapsulated into the single track. The content consuming device further obtains the value of the temporal-layer identifying field, the value of the frame-rate field, and the values of the lower bitrate field and the upper bitrate field in the bitrate information. Thereby, the content consuming device can reserve the temporal layer(s) matching the decoding performance of the decoder (i.e., the foregoing content consuming device) in the N temporal layers according to the value of the temporal-layer identifying field, the value of the frame-rate field, the values of the lower bitrate field and the upper bitrate field in the bitrate information, and the decoding performance of the decoder.

In a case that the media data is video data, after encapsulating the media frames of the video data (or video content) of the N temporal layers into a single track, the content consuming device performs decoding and consumption according to a following process.

The content generating device codes and encapsulates the video content A. It is assumed that the video content A has three temporal layers, L0 to L2, and the media frames of each of the three temporal layers are encapsulated into a single track. It is further assumed that the corresponding frame rate and the corresponding bitrate accumulated below each temporal layer is as follows.

| | |
|---|---|
| L0: | 20fps, bitrate=1mbps; |
| L1: | 30fps, bitrate=1.5mbps;and |
| L2: | 60fps, bitrate=3mbps. |

The content generating device transmits the video file A to a user 1 and a user 2 according to requests of the content consuming devices. The user 1 and the user 2 receive the corresponding file A separately, and perform decoding and consumption according to information of the frame rate and the bitrate corresponding to each temporal layer in the track.

Specifically, the content consuming device at which the user 1 is located has a decoder with a good performance, and chooses to reserve all media frames in the layers L0 to L2 for decoding and presentation, which leads to a best viewing effect. The content consuming device at which the user 2 is located has a decoder with a poor performance, and chooses to reserve all media frames of the layer L0 but discard the media frames of the layers L1 and L2, where only the reserved media frames of the layer L0 are decoded and presented.

The content consuming device reserving the temporal layer matching the decoding performance in the N temporal layers according to the temporal-track signaling information and the decoding performance may alternatively be implemented as follows. In another embodiment, the content consuming device can obtain the value of the multi-temporal-track identifying field in the temporal-track signaling information, and the multi-temporal-track identifying field having the first value indicates that the media frames of the N temporal layers are encapsulated into multiple tracks. In a case that the temporal layer(s) in different tracks are not overlapped, the content consuming device may read the value of the temporal-layer identifying field, the value of the frame-rate field, and the values of the lower bitrate field and the upper bitrate field in the bitrate information from the base track. The media frames encapsulated in the base track are independently decoded. All or a part he temporal layers in the tracks matching the decoding performance of the decoder are reserved according to the value of the temporal-layer identifying field, the value of the frame-rate field, the values of the lower bitrate field and the upper bitrate field in the bitrate information, and the decoding performance.

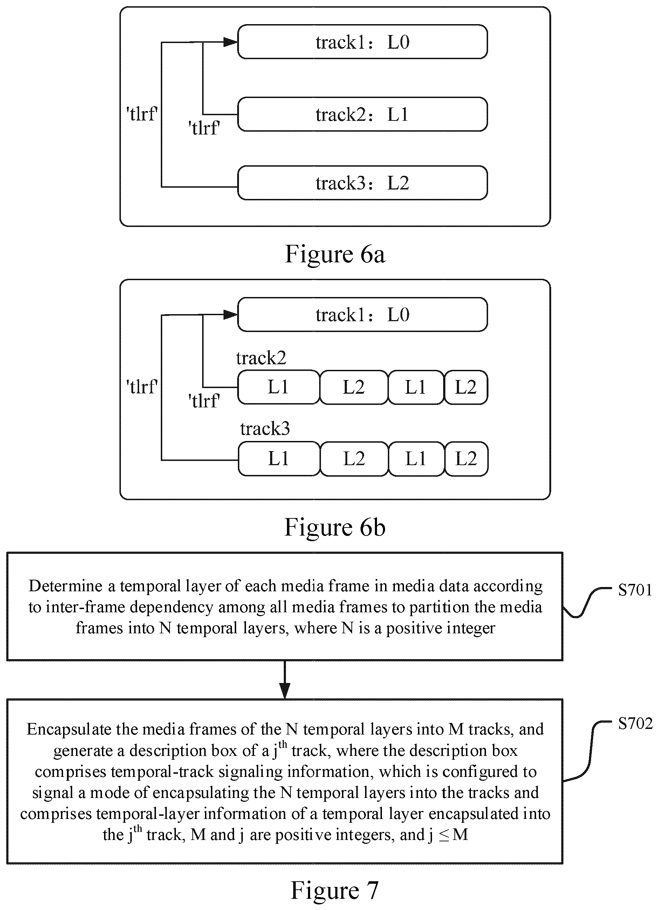

In a case the media data is video data, the content generating device may encapsulates the media frames of the video data (or video content) of the N temporal layers into multiple different tracks, among which the temporal layers do not overlap. The content consuming device may perform the decoding and the consumption as shown in Figure 6a, which is specifically as follows.

The content generating device codes and encapsulates the video content A. It is assumed that the video content A has three temporal layers, L0 to L2, the media frames of the three temporal layers are encapsulated into three different tracks, respectively. Track 1 is the base track, and track 2 and track 3 refer to the track 1 through the "tlrf" type. In the base track, the corresponding frame rate and the corresponding bitrate accumulated below each temporal layer are as follows.

L0:     20fps, bitrate=1mbps;
L1:     30fps, bitrate=1.5mbps;and
L2:     60fps, bitrate=3mbps.

The content generating device transmits the video file A to a user 1 and a user 2 according to requests of the content consuming devices. The user 1 and the user 2 receive the corresponding file A separately, and perform decoding and consumption according to information of the frame rate and the bitrate corresponding to each temporal layer in the track.

Specifically, the content consuming device at which the user 1 is located has a decoder with a good performance, and chooses to reserve all media frames in the tracks 1 to 3 for decoding and presentation, which leads to a best viewing effect. The content consuming device at which the user 2 is located has a decoder with a poor performance, and chooses to reserve all media frames of the track 1 but discard the media frames of the tracks 2 and 3, where only the reserved media frames of the track 1 are decoded and presented.

In another implementation, the content consuming device reads the multi-temporal-track identifying field having the first value, which indicates that the media frames of the N temporal layers are encapsulated into multiple different tracks. In a case that the temporal layers in the tracks overlap, the content consuming device may read the values of the fields in information on combining tracks from the base track, and reserve all or a part of the temporal layers in the track(s) matching the decoding performance of the decoder according to the values of these fields and the decoding performance. The temporal-track signaling information further comprises the information on the strategy of combining tracks. The information on the strategy of combining tracks comprises the track identifying field, the decoding-and-presentation priority field, the alternative-track field, and the alternative-track identifying field. Reference is made to Figure 6b. In a case that the media data is video data, the content generating device may encapsulate the media frames of the video data (or video content) of the N temporal layers into multiple different tracks, of which the temporal layers overlap. The content consuming device may perform the decoding and the consumption specifically as follows.

The content generating device codes and encapsulates the video content A. It is assumed that the video content A has three temporal layers, L0 to L2, and the media frames of the three temporal layers are encapsulated into three different tracks. Track 1 is the base track, and tracks 2 and 3 refer to the track 1 through the "tlrf" type. Both the track 2 and the track 3 contain a part of the media frames of the layer L1 and the layer L2, and overlap with each other. The decoding of the track 2 and the track 3 depends on the decoding of track1, but there is no dependency between the decoding of the track2 and the decoding of the track 3. In the base track, the information of combining tracks is signaled as follows.

track1: is_output_track_flag=1; is_alternative_track_flag=0:

track2: is_output_track _flag=1; is_alternative_track_flag=0:

track3: is_output_track _flag=0; is_alternative_track_flag=1: alternative_track=2.

The content generating device transmits the video file A to a user 1 and a user 2 according to requests of the content consuming devices. The user 1 and the user 2 receive the corresponding file A separately, and perform decoding and consumption according to information of the frame rate and the bitrate corresponding to each temporal layer in the track.

Specifically, the content consuming device at which the user 1 is located has a decoder with a good performance, and chooses to reserve all media frames in the tracks 1 to 3 for decoding and presentation, which leads to a best viewing effect. The content consuming device at which the user 2 is located has a decoder with a poor performance, and chooses to reserve all media frames of the track 1 and the track 2 but discard the media frames of the track 3, where the media frames in the track 1 are decoded and presented.

In one embodiment, the content consuming device reserves one or more media frames of the temporal layer(s), and decodes and displays the reserved media frames. In such case, the content consuming device may reorder (reconstructing) the reserved one or more media frames based on decoding time of each media frame, and thereby decoding and present the reordered one or more media frames. That is, when combining the media frames of different tracks, the content consuming device can arrange all the media frames in the selected multiple tracks based on the decoding time, which corresponds to each media frame and specified in the encapsulation, and the decoding is performed after such reconstruction.

Embodiments of the present disclosure support the content generating device to encapsulate the media frames of the multiple temporal layers into different tracks. During the encapsulation, the description box of each track records the temporal-track signaling information. Thereby, tracks of different temporal layers are associated, information of the temporal layer(s) in the track is indicated, a base track is marked, and information of a strategy for combining tracks having multiple temporal layers is indicated. The content consuming device can select the appropriate temporal layer according to the description box in the track, and combine different tracks for decoding and displaying. Flexibility of multi-track encapsulation is ensured, and computation resources are saved to the maximum extent.

Hereinafter a process of a content generating device encapsulating the media data is described as follows in conjunction with Figure 7. The content generating device may be a server or a terminal device. The server may be an independent server, or a server cluster comprising multiple servers, or a distributed system, and may be a cloud server providing basic cloud computing services, such as cloud services, cloud databases, cloud computing, cloud functions, cloud storage, network services, cloud communication, middleware services, and artificial intelligence platforms. Reference is made to Figure 7, which is a schematic flowchart of a method for processing media data according to an embodiment of the present disclosure. As shown in Figure 7, the method may comprise steps S701 and S702.

In step S701, a temporal layer of each media frame in the media data is determined according to inter-frame dependency among all media frames to partition the media frames into N temporal layers, where N is a positive integer greater than 1.

In step S702, the media frames of the N temporal layers are encapsulated into M tracks, and a description box corresponding to each track is generated, where the description box of a $j^{th}$ track in the M tracks comprises temporal-track signaling information, which is configured to signal a mode of encapsulating the N temporal layers into the tracks and comprises temporal-layer information of a temporal layer encapsulated into the $j^{th}$ track, and M is a positive integer greater than 1.

In the steps S701 and S702, the inter-frame dependency of all media frames in the media data may be as shown in Figure 4, and the temporal layer of each media frame can be determined based on the inter-frame dependency. The temporal-track signaling information comprises a multi-temporal-track identifying field, which is configured to signal the mode of encapsulating the N temporal layers into the tracks. When the content generating device generates the description box of the $j^{th}$ track during encapsulation of the media frames, the generated multi-temporal-track identifying field has a first value in a case that the content generating device encapsulates multiple media frames of the N temporal layers into multiple tracks, and has a second value in a case that the content generating device encapsulates multiple media frames of the N temporal layers into a single track. In addition, the temporal-track signaling information further comprises a temporal-layer total-number field. When the content generating device generates the description box of the $j^{th}$ track during encapsulation of the media frames, a value is assigned to the generated temporal-layer total-number field according to the total quantity of temporal layers encapsulated into the M tracks.

The temporal-layer information of the $j^{th}$ track comprises a temporal-layer number field. When the content generating device generates the description box of the $j^{th}$ track during encapsulation of the media frames, a value is assigned to the generated temporal-layer number field according to a quantity of temporal layers encapsulated into the $j^{th}$ track. In addition, the temporal-layer information of the $j^{th}$ track comprises a temporal-layer identifying field, a frame-rate field, and bitrate information. When the content generating device generates the description box of the jth track during encapsulation of the media frames, an identity of an $i^{th}$ temporal layer in the temporal layers encapsulated into the $j^{th}$ track is stored into the temporal-layer identifying field, a frame rate accumulated by all media frames below the $i^{th}$ temporal layer is stored into the frame-rate field, and a bitrate accumulated by all media frames below the $i^{th}$ temporal layer serves as the bitrate information. In one embodiment, the bitrate information includes a lower bitrate field and an upper bitrate field. When the content generating device determines the bitrate accumulated by the media frame below the $i^{th}$ temporal layer as the bitrate information, the lower 18 bits of the bitrate of the media frames below the $i^{th}$ temporal layer is stored into the lower bitrate field, and upper 12 bits of the bitrate of the media frames below the $i^{th}$ temporal layer is stored into the upper bitrate field.

The temporal-track signaling information further comprises a base-track identifying field. When the content generating device generates the description box of the $j^{th}$ track during encapsulation of the media frames, the generated the base-track identifying field has a first value in a case that the $j^{th}$ track is a base track, and has a second value in a case that the $j^{th}$ track is a non-base track. The media frames encapsulated in the base track is independently decoded. In addition, the temporal-track signaling information further comprises information on a strategy for combining tracks, and such information comprises a track identifying field, a decoding-and-presentation priority field, an alternative-track field, and an alternative-track identifying field. When the content generating device generates the description box of the $j^{th}$ track according to the encapsulating process of the media frame, an identity of the track containing a part of temporal layers is stored in the track identifying field. The generated decoding-and-presentation priority field has a first value in a case that the $j^{th}$ track has a priority in decoding and presentation, and has a second value in a case that the $j^{th}$ track has no priority in decoding and presentation. The generated alternative-track field has a first value, and an identity of another track for which the $j^{th}$ track is an alternative is stored in the alternative-track identifying field, in a case that the $j^{th}$ track is an alternative track of the other track. The generated alternative-track field has a second value, in a case that the $j^{th}$ track is not an alternative track. Each first value may be 1, and each second value may be 0.

In one embodiment, in a case that the $j^{th}$ track is the non-base track, the content generating device generates a track reference box of the $j^{th}$ track, and the track reference box comprises a track reference-type box. The track reference-type box comprises a track identifying field and a reference-type identifying field. The content generating device may store an identity of the base track in the track identifying field, and refer the $j^{th}$ track to the base track according to the reference-type identifying field.

In embodiments of the present disclosure, the content generating device can determine the temporal layer of each media frame in the media data through the inter-frame dependency among all media frames, then encapsulate the media frames of the N temporal layers into the M tracks, generate the description box of the $j^{th}$ track based on the encapsulation of the media frames, and assign a corresponding value to each field comprised in the temporal-track signaling information in the description box. The tracks of different temporal layers can be associated through the value of each field, information of the temporal layer(s) in the track is indicated, a base track is marked, information of a strategy for combining tracks having multiple temporal layers is indicated, and thereby the content consuming device is instructed according the encapsulation of the media frames at the content generating device. Accordingly, the content consuming device can select the appropriate temporal layer according to the description box in the track, and combine different tracks for decoding and displaying. Flexibility of multi-track encapsulation is ensured, and computation resources are saved to the maximum extent.

Hereinabove the method embodiments are described in detail. In order to facilitate better implementation of the foregoing solutions, hereinafter apparatus embodiments are correspondingly provided.

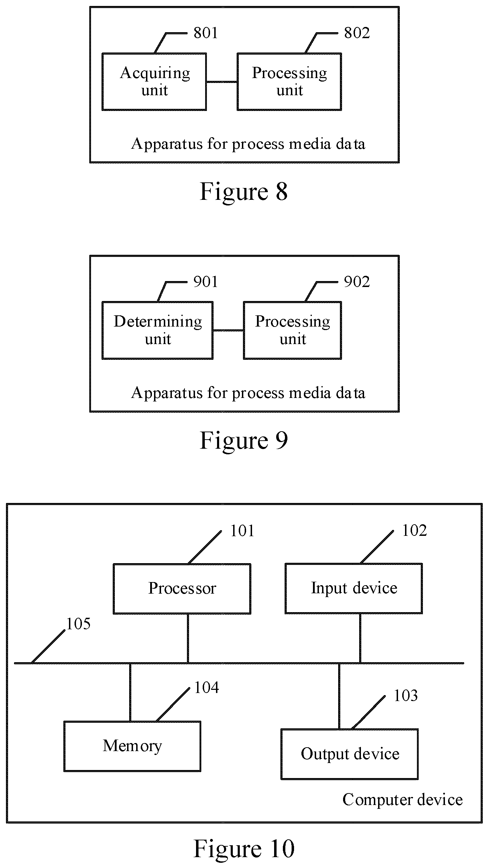

Reference is made to Figure 8, which shows a schematic structural diagram of an apparatus for processing media data according to an embodiment of the present disclosure. The apparatus for processing media data may be a computer program (including program codes) executed on the content consuming device. For example, the apparatus may be application software in the content consuming device. As shown in Figure 8, the apparatus for processing media data may comprise an acquisition unit 801 and a processing unit 802.

In an embodiment, the apparatus for processing media data is configured to execute steps of the method as shown in Figure 5. The media data comprises multiple media frames, which are partitioned into N temporal layers and are encapsulated into M tracks. M and N each is a positive integer greater than 1.

The acquisition unit 801 is configured to acquire a description box of a $j^{th}$ track in the M tracks, where the description box comprises temporal-track signaling information, which is configured to signal a mode of encapsulating the N temporal layers into the tracks and comprises temporal-layer information of a temporal layer encapsulated into the $j^{th}$ track, and j is a positive integer smaller than or equal to M.

The processing unit 802 is configured to decode the media data according to the temporal-track signaling information.

In one embodiment, the temporal-track signaling information comprises a multi-temporal-track identifying field, which is configured to signal the mode of encapsulating the N temporal layers into the tracks.

The multi-temporal-track identifying field having a first value indicates that the multiple media frames of the N temporal layers are encapsulated into multiple different tracks.

The multi-temporal-track identifying field having a second value indicates that the multiple media frames of the N temporal layers are encapsulated into a single track.

In one embodiment, the temporal-track signaling information comprises a temporal-layer total-number field, which is configured to signal a total number of temporal layers encapsulated into the M tracks.

In one embodiment, the temporal-layer information of the $j^{th}$ track comprises a temporal-layer number field, which is configured to signal a quantity of temporal layers encapsulated into the $j^{th}$ track.

In one embodiment, the temporal-layer information of the $j^{th}$ track comprises a temporal-layer identifying field, a frame-rate field, and bitrate information.

The temporal-layer identifying field is configured to signal an identity of an $i^{th}$ temporal layer in temporal layers which are encapsulated into the $j^{th}$ track.

The frame-rate field is configured to signal a frame rate accumulated by all media frames below the $i^{th}$ temporal layer.

The bitrate information is configured to signal a bitrate accumulated by all media frames below the $i^{th}$ temporal layer.

In one embodiment, the bitrate information comprises a lower bitrate field and an upper bitrate field.

The lower bitrate field is configured to signal lower 18 bits of the bitrate accumulated by all media frames below the $i^{th}$ temporal layer.

The upper bitrate field is configured to signal upper 12 bits of the bitrate accumulated by all media frames below the $i^{th}$ temporal layer.

In one embodiment, the temporal-track signaling information comprises a base-track identifying field, which is configured to signal whether the $j^{th}$ track is a base track.

The base-track identifying field having a first value indicates that the $j^{th}$ track is the base track, and the base-track identifying field having a second value indicates that the $j^{th}$ track is a non-base track.

Media frames encapsulated in the base track is independently decoded.

In one embodiment, the temporal-track signaling information further comprises information on a strategy of combining tracks, and the information on the strategy of combining tracks comprises a track identifying field, a decoding-and-presentation priority field, an alternative-track field, and an alternative-track identifying field.

The track identifying field is configured to signal an identity of a track which comprises a part of the temporal layers.

The decoding-and-presentation priority field is configured to signal whether the $j^{th}$ track has priority in decoding and presentation. The decoding-and-presentation priority field having a first value indicates that the $j^{th}$ track has the priority in decoding and presentation, and the decoding-and-presentation priority field having a second value indicates that the $j^{th}$ track does not have the priority in decoding and presentation.

The alternative-track field is configured to signal whether the $j^{th}$ track is an alternative track of another track in the M tracks. The alternative-track field having a first value indicates that the $j^{th}$ track is the alternative track of another track in the M tracks, and the alternative-track field having a second value indicates that the $j^{th}$ track is not the alternative track of any other track in the M tracks.

The alternative-track identifying field is configured to signal an identity of a track for which the $j^{th}$ track is the alternative track.

In one embodiment, the $j^{th}$ track is a non-base track and further comprises a track reference box, and the track reference box comprises a track reference-type box.

The track reference-type box comprises a track identifying field and a reference-type identifying field.

The track identifying field is configured to store an identity of a base track, and the reference-type identifying field is configured to signal that a target of reference is the base track.

In one embodiment, the processing unit 802 is further configured to reserve a temporal layer, which matches a decoding performance of a decoder, in the N temporal layers according to the temporal-track signaling information and the decoding performance, and decode media frames of the reserved temporal layer for presentation.

In one embodiment, the temporal-track signaling information comprises the multi-temporal-track identifying field, the temporal-layer identifying field, the frame-rate field, and the bitrate information which comprises the lower bitrate field and the upper bitrate field. The processing unit 802 is further configured to: obtain a value of the multi-temporal-track identifying field from the temporal-track signaling information, where the multi-temporal-track identifying field has the second value and indicates that the media frames of the N temporal layers are encapsulated into a single track; obtain a value of the temporal-layer identifying field, a value of the frame-rate field, and values of the lower bitrate field and the upper bitrate field in the bitrate information; and reserve a temporal layer, which matches a decoding performance of a decoder, in the N temporal layers according to the value of the temporal-layer identifying field, the value of the frame-rate field, the values of the lower bitrate field and the upper bitrate field in the bitrate information, and the decoding performance.

In one embodiment, the temporal-track signaling information comprises the multi-temporal-track identifying field, the temporal-layer identifying field, the frame-rate field, and the bitrate information which comprises the lower bitrate field and the upper bitrate field. The processing unit 802 is further configured to: obtain a value of the multi-temporal-track identifying field from the temporal-track signaling information, where the multi-temporal-track identifying field has the first value and indicates that the media frames of the N temporal layers are encapsulated into multiple tracks; obtain from a base track a value of the temporal-layer identifying field, a value of the frame-rate field, and values of the lower bitrate field and the upper bitrate field in the bitrate information, in response to temporal layers in the different tracks not overlapping, where media frames encapsulated in the base track are independently decoded; and reserve all or a part of temporal layers in a track, which matches a decoding performance of a decoder, according to the value of the temporal-layer identifying field, the value of the frame-rate field, the value of the lower bitrate field and the upper bitrate field in the bitrate information, and the decoding performance.

In one embodiment, the temporal-track signaling information further comprises the information on the strategy of combining tracks, and the information on the strategy of combining tracks comprises the track identifying field, the decoding-and-presentation priority field, the alternative-track field, and the alternative-track identifying field.

The processing unit 802 is further configured to: read values of fields in the information on the strategy of combining tracks from the base track, where the multi-temporal-track identifying field has the first value and indicates that the media frames of the N temporal layers are encapsulated into multiple tracks among which temporal layers overlap.

The processing unit 802 is further configured to reserve all or a part of the temporal layers, which match with a decoding performance of a decoder, in the tracks according to the values of the fields in the information on the strategy of combining tracks and the decoding performance.

In one embodiment, the processing unit 802 is further configured to: reorder the reserved one or more media frames based on decoding time of each of the reserved one or more media frames; and decode the reordered one or more media frames for presentation.

Embodiments of the present disclosure support a content generating device to encapsulate the media frames of the multiple temporal layers into different tracks. During the encapsulation, the description box of each track records the temporal-track signaling information. Thereby, tracks of different temporal layers are associated, information of the temporal layer(s) in the track is indicated, a base track is marked, and information of a strategy for combining tracks having multiple temporal layers is indicated. Hence, the processing unit 802 can select the appropriate temporal layer according to the description box in the track, and combine different tracks for decoding and displaying. Flexibility of multi-track encapsulation is ensured, and computation resources are saved to the maximum extent.

Hereinabove the method embodiments are described in detail. In order to facilitate better implementation of the foregoing solutions, hereinafter apparatus embodiments are correspondingly provided.

Reference is made to Figure 9, which shows a schematic structural diagram of an apparatus for processing media data according to an embodiment of the present disclosure. The apparatus for processing media data may be a computer program (including program codes) executed on the content generating device. For example, the apparatus may be application software in the content generating device. As shown in Figure 9, the apparatus for processing media data may comprise an acquisition unit 901 and a processing unit 902.

In an embodiment, the apparatus for processing media data is configured to execute steps of the method as shown in Figure 7.

The determination unit 901 is configured to determine a temporal layer of each media frame in the media data according to inter-frame dependency among all media frames to partition the media frames into N temporal layers, where N is a positive integer greater than 1.

The processing unit 902 is configured to encapsulate the media frames of the N temporal layers into M tracks, and generate a description box corresponding to each track, where the description box of a $j^{th}$ track in the M tracks comprises temporal-track signaling information, which is configured to signal a mode of encapsulating the N temporal layers into the tracks and comprises temporal-layer information of a temporal layer encapsulated into the $j^{th}$ track, and M is a positive integer greater than 1.

In one embodiment, the temporal-track signaling information comprises a multi-temporal-track identifying field, which is configured to signal the mode of encapsulating the N temporal layers into the tracks. The processing unit 902 is further configured to: assign a first value to the generated multi-temporal-track identifying field, in response to the multiple media frames of the N temporal layers being encapsulated into multiple different tracks; and assign a second value to the generated multi-temporal-track identifying field, in response to the multiple media frames of the N temporal layers being encapsulated into a single track.

In one embodiment, the temporal-track signaling information comprises a temporal-layer total-number field. The processing unit 902 is further configured to: assign a value to the generated temporal-layer total-number field according to a total quantity of temporal layers encapsulated into the M tracks.

In one embodiment, the temporal-layer information of the $j^{th}$ track comprises a temporal-layer number field. The processing unit 902 is further configured to: assign a value to the temporal-layer number field according to a quantity of temporal layers encapsulated into the $j^{th}$ track.

In one embodiment, the temporal-layer information of the $j^{th}$ track comprises a temporal-layer identifying field, a frame-rate field, and bitrate information. The processing unit 902 is further configured to: store an identity of an $i^{th}$ temporal layer in temporal layers, which are encapsulated into the $j^{th}$ track, into the temporal-layer identifying field; store a frame rate accumulated by all media frames below the $i^{th}$ temporal layer into the frame-rate field; and determine a bitrate accumulated by all media frames below the $i^{th}$ temporal layer as the bitrate information.

In one embodiment, the bitrate information comprises a lower bitrate field and an upper bitrate field. The processing unit 902 is further configured to: store lower 18 bits of the bitrate accumulated by all media frames below the $i^{th}$

temporal layer into the lower bitrate field; and store upper 12 bits of the bitrate accumulated by all media frames below the $i^{th}$ temporal layer into the upper bitrate field.

In one embodiment, the temporal-track signaling information comprises a base-track identifying field. The processing unit 902 is further configured to: assign a first value to the generated base-track identifying field in response to the $j^{th}$ track being a base track; and assign a second value to the generated base-track identifying field in response to the $j^{th}$ track being a non-base track.

Media frames encapsulated in the base track are independently decoded.

In one embodiment, the temporal-track signaling information further comprises information on a strategy of combining tracks. The information on the strategy of combining tracks comprises a track identifying field, a decoding-and-presentation priority field, an alternative-track field, and an alternative-track identifying field. The processing unit 902 is further configured to: store an identity of a track comprising a part of the temporal layers into the track identifying field; assign a first value to the decoding-and-presentation priority field, in response to the $j^{th}$ track having a priority in decoding and presentation; assign a second value to the decoding-and-presentation priority field, in response to the $j^{th}$ track having no priority in decoding and presentation; assign the first value to the alternative-track field and storing an identity of another track into the alternative-track identifying field, in response to the $j^{th}$ track being an alternative track of the another track; and assign the second value to the alternative-track field in response to the $j^{th}$ track not being an alternative track of any other track.

In one embodiment, the processing unit 902 is further configured to generate a track reference box of the $j^{th}$ track in response to the $j^{th}$ track being a non-base track, where the track reference box comprises a track reference-type box, and the track reference-type box comprises a track identifying field and a reference-type identifying field.

The processing unit 902 is further configured to store an identity of a base track in the track identifying field, where the $j^{th}$ track is referred to the base track according to the reference-type identifying field.

In embodiments of the present disclosure, the processing unit 902 can determine the temporal layer of each media frame in the media data through the inter-frame dependency among all media frames, then encapsulate the media frames of the N temporal layers into the M tracks, generate the description box of the $j^{th}$ track based on the encapsulation of the media frames, and assign a corresponding value to each field comprised in the temporal-track signaling information in the description box. The tracks of different temporal layers can be associated through the value of each field, information of the temporal layer(s) in the track is indicated, a base track is marked, information of a strategy for combining tracks having multiple temporal layers is indicated, and thereby the content consuming device is instructed according the encapsulation of the media frames at the content generating device. Accordingly, the processing unit 902 can select the appropriate temporal layer according to the description box in the track, and combine different tracks for decoding and displaying. Flexibility of multi-track encapsulation is ensured, and computation resources are saved to the maximum extent.

Reference is made to Figure 10, which is a schematic structural block diagram of a computer device according to an embodiment of the present disclosure. The computer device may be the foregoing content consuming device or the foregoing content generating device, and may be a server or a terminal device. The computer device as shown in Figure 10 may comprise: one or more processors 101, one or more input devices 102, one or more output devices 103, and a memory 104. The processors 101, the input devices 102, the output devices 103 and the memory 104 are connected via a bus 105. The memory 104 is configured to store a computer program comprising program instructions. The processors 101 are configured to execute the program instructions stored in the memory 104.

The memory 104 may include a volatile memory such as a random-access memory (RAM), a non-volatile memory such as a flash memory or a solid-state drive (SSD), or a combination of the foregoing memories.

The processor 101 may be a central processing unit (CPU) or a hardware chip. The hardware chip may be an application-specific integrated circuit (ASIC), a programmable logic device (PLD) or the like. The PLD may be a field-programmable gate array (FPGA), general array logic (GAL), or the like. The processor 101 may be a combination of the above structures.

Herein the memory 104 is configured to store the computer program comprising the program instructions, and the processor 101 is configured to execute the program instructions stored in the memory 104 to implement steps involved in the method for processing media data as shown in Figure 5. The media data comprises multiple media frames, which are partitioned into N temporal layers and are encapsulated into M tracks, where M and N each is a positive integer greater than 1.

In one embodiment, the processor 101 is configured to invoke the program instructions to perform following operations.

A description box of a $j^{th}$ track in the M tracks is acquired, where the description box comprises temporal-track signaling information, which is configured to signal a mode of encapsulating the N temporal layers into the tracks and comprises temporal-layer information of a temporal layer encapsulated into the $j^{th}$ track, and j is a positive integer smaller than or equal to M.

The media data is decoded according to the temporal-track signaling information.

In one embodiment, the memory 104 is configured to store the computer program comprising the program instructions, and the processor 101 is configured to execute the program instructions stored in the memory 104 to implement steps involved in the method for processing media data as shown in Figure 7.

In one embodiment, the processor 101 is configured to invoke the program instructions to perform following operations.

A temporal layer of each media frame in the media data is determined according to inter-frame dependency among all media frames to partition the media frames into N temporal layers, where N is a positive integer greater than 1.

The media frames of the N temporal layers are encapsulated into M tracks, and a description box corresponding to each track is generated, where the description box of a $j^{th}$ track in the M tracks comprises temporal-track signaling information, which is configured to signal a mode of encapsulating the N temporal layers into the tracks and comprises temporal-layer information of a temporal layer encapsulated into the $j^{th}$ track, and M is a positive integer greater than 1.

In addition, a storage medium is further provided according to an embodiment of the present disclosure. The storage medium is configured to store a computer program, and the computer program is configured to perform the method in the foregoing embodiments.

A computer program product comprising instructions is further provided according to an embodiment of the present disclosure. The instructions when executed on a computer configure the computer to perform the method in the foregoing embodiments.

Those skilled in the art can appreciated that all or some of the processes of the methods in the foregoing embodiments may be implemented by a computer program instructing relevant hardware. The program may be stored in a computer-readable storage medium. The program when being executed may include processes of the foregoing method embodiments. The storage medium may be a magnetic disk, an optical disc, a read-only memory (ROM), a random access memory (RAM), or the like.

Hereinabove disclosed are merely preferable embodiments of the present disclosure, which are not intended to limit the protection scope of the present disclosure. Equivalent variations made in accordance with the claims of the present disclosure shall fall within the scope of the present disclosure.

The memory 104 may include a volatile memory such as a random-access memory (RAM), a non-volatile memory such as a flash memory or a solid-state drive (SSD), or a combination of the foregoing memories.

The processor 101 may be a central processing unit (CPU) or a hardware chip. The hardware chip may be an application-specific integrated circuit (ASIC), a programmable logic device (PLD) or the like. The PLD may be a field-programmable gate array (FPGA), general array logic (GAL), or the like. The processor 101 may be a combination of the above structures.

Herein the memory 104 is configured to store the computer program comprising the program instructions, and the processor 101 is configured to execute the program instructions stored in the memory 104 to implement steps involved in the method for processing media data as shown in Figure 5. The media data comprises multiple media frames, which are partitioned into N temporal layers and are encapsulated into M tracks, where M and N each is a positive integer greater than 1.

In one embodiment, the processor 101 is configured to invoke the program instructions to perform following operations.

A description box of a $j^{th}$ track in the M tracks is acquired, where the description box comprises temporal-track signaling information, which is configured to signal a mode of encapsulating the N temporal layers into the tracks and comprises temporal-layer information of a temporal layer encapsulated into the $j^{th}$ track, and j is a positive integer smaller than or equal to M.

The media data is decoded according to the temporal-track signaling information.

In one embodiment, the memory 104 is configured to store the computer program comprising the program instructions, and the processor 101 is configured to execute the program instructions stored in the memory 104 to implement steps involved in the method for processing media data as shown in Figure 7.

In one embodiment, the processor 101 is configured to invoke the program instructions to perform following operations.

A temporal layer of each media frame in the media data is determined according to inter-frame dependency among all media frames to partition the media frames into N temporal layers, where N is a positive integer greater than 1.

The media frames of the N temporal layers are encapsulated into M tracks, and a description box corresponding to each track is generated, where the description box of a $j^{th}$ track in the M tracks comprises temporal-track signaling information, which is configured to signal a mode of encapsulating the N temporal layers into the tracks and comprises temporal-layer information of a temporal layer encapsulated into the $j^{th}$ track, and M is a positive integer greater than 1.

In addition, a storage medium is further provided according to an embodiment of the present disclosure. The storage medium is configured to store a computer program, and the computer program is configured to perform the method in the foregoing embodiments.

A computer program product comprising instructions is further provided according to an embodiment of the present disclosure. The instructions when executed on a computer configure the computer to perform the method in the foregoing embodiments.

Those skilled in the art can appreciated that all or some of the processes of the methods in the foregoing embodiments may be implemented by a computer program instructing relevant hardware. The program may be stored in a computer-readable storage medium. The program when being executed may include processes of the foregoing method embodiments. The storage medium may be a magnetic disk, an optical disc, a read-only memory (ROM), a random access memory (RAM), or the like.

Hereinabove disclosed are merely preferable embodiments of the present disclosure, which are not intended to limit the protection scope of the present disclosure. Equivalent variations made in accordance with the claims of the present disclosure shall fall within the scope of the present disclosure.

**Claims**

1. A method for processing media data, wherein:

   the media data comprises a plurality of media frames, which is partitioned into N temporal layers and is encapsulated into M tracks, wherein M and N each is a positive integer greater than 1;
   the method is executable by a content consuming device, and comprises:

   acquiring (S501) a description box of a $j^{th}$ track in the M tracks, wherein the description box comprises temporal-track signaling information, which is configured to signal a mode of encapsulating the N temporal layers into the tracks and comprises temporal-layer information of a temporal layer encapsulated into the $j^{th}$ track, and j is a positive integer smaller than or equal to M, and wherein the temporal-track signaling information comprises a multi-temporal-track identifying field, which is configured to signal the mode of encapsulating the N temporal layers into the tracks, the multi-temporal-track identifying field having a first value indicates that the plurality of media frames of the N temporal layers is encapsulated into a plurality of different tracks, and the multi-temporal-track identifying field having a second value indicates that the plurality of media frames of the N temporal layers are encapsulated into a single track; and
   decoding (S502) the media data according to the temporal-track signaling information,
   wherein the temporal-track signaling information comprises a temporal-layer total-number field, which is configured to signal a total number of temporal layers encapsulated into the M tracks,
   wherein the temporal-layer information of the $j^{th}$ track comprises a temporal-layer number field, which is configured to signal a quantity of temporal layers encapsulated into the $j^{th}$ track,
   wherein the temporal-layer information of the $j^{th}$ track comprises:

      a temporal-layer identifying field, configured to signal an identity of an $i^{th}$ temporal layer in temporal layers which are encapsulated into the $j^{th}$ track;
      a frame-rate field, configured to signal a frame rate accumulated by all media frames below the $i^{th}$ temporal layer; and
      bitrate information, configured to signal a bitrate accumulated by all media frames below the $i^{th}$ temporal layer,
      wherein:

         the temporal-track signaling information comprises a base-track identifying field, which is configured to signal whether the $j^{th}$ track is a base track;
         the base-track identifying field having a first value indicates that the $j^{th}$ track is the base track, and the base-track identifying field having a second value indicates that the $j^{th}$ track is a non-base track;
         media frames encapsulated in the base track is independently decoded,
         wherein the temporal-track signaling information further comprises information on a strategy of combining tracks, and the information on the strategy of combining tracks comprises:

            a track identifying field, configured to signal an identity of a track which comprises a part of the temporal layers;
            a decoding-and-presentation priority field, configured to signal whether the $j^{th}$ track has priority in decoding and presentation, wherein the decoding-and-presentation priority field having a first value indicates that the $j^{th}$ track has the priority in decoding and presentation, and the decoding-and-presentation priority field having a second value indicates that the $j^{th}$ track does not have the priority in decoding and presentation;

an alternative-track field, configured to signal whether the j$^{th}$ track is an alternative track of another track in the M tracks, wherein the alternative-track field having the first value indicates that the j$^{th}$ track is the alternative track of another track in the M tracks, and the alternative-track field having the second value indicates that the j$^{th}$ track is not the alternative track of any other track in the M tracks; and

an alternative-track identifying field, configured to signal an identity of the another track, wherein in case the j$^{th}$ track is a non-base track, the j$^{th}$ track further comprises a reference box, and the track reference box comprises a track reference-type box;

the track reference-type box comprises:

a track identifying field, configured to store an identity of a base track, and

a reference-type identifying field, configured to signal that a target of reference is the base track, wherein the decoding the media data according to the temporal-track signaling information comprises:

reserving a temporal layer, which matches a decoding performance of a decoder, in the N temporal layers according to the temporal-track signaling information and the decoding performance;

decoding media frames of the reserved temporal layer.

wherein the temporal-track signaling information comprises the multi-temporal-track identifying field, the temporal-layer identifying field, the frame-rate field, and the bitrate information which comprises the lower bitrate field and the upper bitrate field; and

reserving the temporal layer, which matches the decoding performance of the decoder, in the N temporal layers according to the temporal-track signaling information and the decoding performance comprises:

obtaining a value of the multi-temporal-track identifying field from the temporal-track signaling information, wherein:

when the multi-temporal-track identifying field has the second value and indicates that media frames of the N temporal layers are encapsulated into a single track;

obtaining a value of the temporal-layer identifying field, a value of the frame-rate field, and values of the lower bitrate field and the upper bitrate field in the bitrate information; and

reserving the temporal layer, which matches the decoding performance of the decoder, in the N temporal layers according to the value of the temporal-layer identifying field, the value of the frame-rate field, the values of the lower bitrate field and the upper bitrate field in the bitrate information, and the decoding performance,

when the multi-temporal-track identifying field has the first value and indicates that media frames of the N temporal layers are encapsulated into a plurality of different tracks;

indicating that the media frames of the N temporal layers are encapsulated into different tracks, in response to the multi-temporal-track identifying field having the first value;

obtaining from a base track a value of the temporal-layer identifying field, a value of the frame-rate field, and values of the lower bitrate field and the upper bitrate field in the bitrate information, in response to temporal layers in the different tracks not overlapping, wherein media frames encapsulated in the base track are independently decoded; and

reserving all or a part of temporal layers in a track, which matches the decoding performance of the decoder, according to the value of the temporal-layer identifying field, the value of the frame-rate field, the value of the lower bitrate field and the upper bitrate field in the bitrate information, and the decoding performance,

wherein the temporal-track signaling information further comprises the information on the strategy of combining tracks, and the information on the strategy of combining tracks comprises the track identifying field, the decoding-and-presentation priority field, the alternative-track field, and the alternative-track identifying field, and the method further comprises:

reading values of fields in the information on the strategy of combining tracks from the base track, wherein the multi-temporal-track identifying field has the first value temporal layers and indicates that the media frames of the N temporal layers are encapsulated into different tracks among which temporal layers overlap; and

reserving all or the part of the temporal layers in the track, which matches with the decoding performance of the decoder, according to the values of the fields in the information on the strategy of combining tracks and the decoding performance.

2. The method according to claim 1, wherein the bitrate information comprises:

a lower bitrate field, configured to signal lower 18 bits of the bitrate accumulated by all media frames below the $i^{th}$ temporal layer; and

an upper bitrate field, configured to signal upper 12 bits of the bitrate accumulated by all media frames below the $i^{th}$ temporal layer.

3. A computer device, comprising:

a processor (101), configured to execute one or more instructions; and
a memory (104), storing the one or more instructions;
wherein the one or more instructions are configured to be loaded and executed by the processor to perform the method according to any one of claims 1 to 2.

4. A computer-readable storage medium, storing a computer program comprising program instructions, wherein: the program instructions when executed by a processor configure the processor to perform the method according to any one of claims 1 to 2.

**Patentansprüche**

1. Verfahren zum Verarbeiten von Mediendaten, wobei:

die Mediendaten eine Vielzahl von Medienframes umfassen, die in N Zeitschichten partitioniert sind und denen M Spuren gekapselt sind, wobei M und N jeweils eine positive Ganzzahl größer als 1 ist;
das Verfahren von einer Inhaltsverbrauchervorrichtung ausführbar ist und Folgendes umfasst:

Erfassen (S501) einer Beschreibungsbox einer j-ten Spur der M Spuren, wobei die Beschreibungsbox Zeitspursignalisierungsinformationen umfasst, die dazu ausgelegt sind, einen Modus des Kapselns der N Zeitschichten in die Spuren zu signalisieren, und Zeitschichtinformationen einer Zeitschicht umfasst, die in der j-ten Spur gekapselt ist, und j eine positive Ganzzahl kleiner als oder gleich M ist, und wobei die Zeitspursignalisierungsinformationen ein Identifikationsfeld für mehrere Zeitschichten umfassen, das dazu ausgelegt ist, den Modus des Kapselns der N Zeitschichten in den Spuren zu signalisieren, wobei das Identifikationsfeld für mehrere Zeitschichten einen ersten Wert aufweist, der anzeigt, dass die Vielzahl von Medienframes der N Zeitschichten in einer Vielzahl von verschiedenen Spuren gekapselt ist, und das Identifikationsfeld für mehrere Zeitschichten einen zweiten Wert aufweist, der anzeigt, dass die Vielzahl von Medienframes der N Zeitschichten in einer einzelnen Spur gekapselt sind; und
Decodieren (S502) der Mediendaten gemäß den Zeitspursignalisierungsinformationen,
wobei die Zeitspursignalisierungsinformationen ein Feld für eine Gesamtzahl von Zeitschichten umfassen, das dazu ausgelegt ist, eine Gesamtzahl von Zeitschichten zu signalisieren, die in den M Schichten gekapselt sind,
wobei die Zeitschichtinformationen der j-ten Spur ein Feld für die Anzahl von Zeitschichten umfassen, die dazu ausgelegt sind, eine Menge von Zeitschichten zu signalisieren, die in der j-ten Spur gekapselt sind,
wobei die Zeitschichtinformationen der j-ten Spur Folgendes umfassen:

ein Identifikationsfeld für Zeitschichten, das dazu ausgelegt ist, eine Identität einer i-ten Zeitschicht in den Zeitschichten zu signalisieren, die in der j-ten Spur gekapselt sind;
ein Bildfrequenzfeld, das dazu ausgelegt ist, eine Bildfrequenz, die von allen Medienframes unter der i-ten Zeitschicht angesammelt ist, zu signalisieren; und
Bitrateninformationen, die dazu ausgelegt sind, eine Bitrate, die von allen Medienframes unter der i-ten Zeitschicht angesammelt ist, zu signalisieren,

wobei:

die Zeitspursignalisierungsinformationen ein Basisspuridentifikationsfeld umfassen, das dazu ausgelegt ist zu signalisieren, ob die j-te Spur eine Basisspur ist; wobei das Basisspuridentifikationsfeld einen ersten Wert aufweist, der anzeigt, dass die j-te Spur die Basisspur ist, und wobei das Basisspuridentifikationsfeld einen zweiten Wert aufweist, der anzeigt, dass die j-te Spur keine Basisspur ist; Medienframes, die in der Basisspur gekapselt sind, unabhängig decodiert werden, wobei die Zeitspursignalisierungsinformationen ferner Informationen zu einer Strategie des Kombinierens von Spuren umfassen und die Informationen zur Strategie des Kombinierens von Spuren Folgendes umfassen:

ein Spuridentifikationsfeld, das dazu ausgelegt ist, eine Identität einer Spur zu identifizieren, die einen Teil der Zeitschichten umfasst; ein Prioritätsfeld für Decodierung und Präsentation, das dazu ausgelegt ist zu signalisieren, ob die j-te Spur eine Priorität bei Decodierung und Präsentation aufweist, wobei das Prioritätsfeld für Decodierung und Präsentation einen ersten Wert aufweist, der anzeigt, dass die j-te Spur die Priorität bei Decodierung und Präsentation aufweist, und wobei das Prioritätsfeld für Decodierung und Präsentation einen zweiten Wert aufweist, der anzeigt, dass die j-te Spur die Priorität bei Decodierung und Präsentation nicht aufweist; ein Feld für alternative Spuren, das dazu ausgelegt ist zu signalisieren, ob die j-te Spur eine alternative Spur einer anderen Spur der M Spuren ist, wobei das Feld für alternative Spuren den ersten Wert aufweist, der anzeigt, dass die j-te Spur die alternative Spur einer anderen Spur der M Spuren ist, und wobei das Feld für alternative Spuren einen zweiten Wert aufweist, der anzeigt, dass die j-te Spur nicht die alternative Spur einer anderen Spur der M Spuren ist; und ein Identifikationsfeld für alternative Spuren, das dazu ausgelegt ist, eine Identität der anderen Spur zu signalisieren, wobei in einem Fall, in dem die j-te Spur keine Basisspur ist, die j-te Spur ferner eine Referenzbox umfasst und die Referenzbox eine Spurreferenzartbox umfasst; die Spurreferenzartbox umfasst Folgendes:

ein Spuridentifikationsfeld, das dazu ausgelegt ist, eine Identität einer Basisspur zu speichern, und ein Identifikationsfeld für eine Referenzart, das dazu ausgelegt ist zu signalisieren, dass ein Referenzziel die Basisspur ist, wobei das Decodieren der Mediendaten gemäß den Zeitspursignalisierungsinformationen Folgendes umfasst:

Reservieren einer Zeitschicht, die mit einer Decodierleistung eines Decodierers übereinstimmt, in den N Zeitschichten gemäß den Zeitspursignalisierungsinformationen und der Decodierleistung; Decodieren von Medienframes der reservierten Zeitschicht; wobei die Zeitspursignalisierungsinformationen das Identifikationsfeld für mehrere Zeitspuren, das Identifikationsfeld für Zeitschichten, das Bildfrequenzfeld und die Bitrateninformationen umfassen, die das untere Bitratenfeld und das obere Bitratenfeld umfassen; und das Reservieren der Zeitschicht, die mit der Decodierleistung des Decodierers übereinstimmt, in den N Zeitschichten gemäß den Zeitspursignalisierungsinformationen und der Decodierleistung umfasst Folgendes: Erhalten eines Wertes des Identifikationsfeldes für mehrere Zeitschichten aus den Zeitspursignalisierungsinformationen, wobei:

wenn das Identifikationsfeld für mehrere Zeitschichten den zweiten Wert aufweist und anzeigt, dass Medienframes der N Zeitschichten in einer einzelnen Spur gekapselt sind; Erhalten eines Wertes des Identifikationsfeldes für Zeitschichten, eines Wertes des Bildfrequenzfeldes und von Werten des unteren Bitratenfeldes und des oberen Bitratenfeldes in den Bitrateninformationen; und

Reservieren der Zeitschicht, die mit der Decodierleistung des Decodierers übereinstimmt, in den N Zeitschichten gemäß dem Wert des Identifikationsfeldes für Zeitschichten, dem Wert des Bildfrequenzfeldes, den Werten des unteren Bitratenfeldes und des oberen Bitratenfeldes in den Bitrateninformationen und der Decodierleistung,

wenn das Identifikationsfeld für mehrere Zeitschichten den ersten Wert aufweist und anzeigt, dass Medienframes der N Zeitschichten in einer Vielzahl von verschiedenen Spuren gekapselt sind;

Anzeigen, dass die Medienframes der N Zeitschichten in verschiedenen Spuren gekapselt sind, in Reaktion darauf, dass das Identifikationsfeld für mehrere Zeitschichten den ersten Wert aufweist;

Erhalten eines Wertes des Identifikationsfeldes für Zeitschichten, eines Wertes des Bildfrequenzfeldes und von Werten des unteren Bitratenfeldes und des oberen Bitratenfeldes in den Bitrateninformationen in Reaktion darauf, dass sich Zeitschichten in den verschiedenen Spuren nicht überlappen, von einer Basisspur, wobei Medienframes, die in der Basisspur gekapselt sind, unabhängig decodiert werden; und

Reservieren von allen oder einem Teil von Zeitschichten in einer Spur, die mit der Decodierleistung des Decodierers übereinstimmt, gemäß dem Wert des Identifikationsfeldes für Zeitschichten, dem Wert des Bildfrequenzfeldes, dem Wert des unteren Bitratenfeldes und des oberen Bitratenfeldes in den Bitrateninformationen und der Decodierleistung,

wobei die Zeitspursignalisierungsinformationen ferner die Informationen zur Strategie des Kombinierens von Spuren umfassen und die Informationen zur Strategie des Kombinierens von Spuren das Spuridentifikationsfeld, das Prioritätsfeld für Decodierung und Präsentation, das Feld für alternative Spuren und das Identifikationsfeld für alternative Spuren umfasst und das Verfahren ferner Folgendes umfasst:

Lesen von Werten von Feldern in den Informationen zur Strategie des Kombinierens von Spuren aus der Basisspur, wobei das Identifikationsfeld für mehrere Zeitschichten den ersten Wert aufweist Zeitschichten und anzeigt, dass die Medienframes der N Zeitschichten in verschiedenen Spuren gekapselt sind, in denen sich Zeitschichten überlappen; und

Reservieren von allen oder einem Teil der Zeitschichten in der Spur, die mit der Decodierleistung des Decodierers übereinstimmt, gemäß den Werten der Felder in den Informationen zur Strategie des Kombinierens von Spuren und der Decodierleistung.

2. Verfahren nach Anspruch 1, wobei die Bitrateninformationen Folgendes umfassen:

ein unteres Bitratenfeld, das dazu ausgelegt ist, untere 18 Bits der Bitrate zu signalisieren, die von allen Medienframes unter der i-ten Zeitschicht angesammelt ist; und
ein oberes Bitratenfeld, das dazu ausgelegt ist, obere 12 Bits der Bitrate zu signalisieren, die von allen Medienframes unter der i-ten Zeitschicht angesammelt ist.

3. Computervorrichtung, die Folgendes umfasst:

einen Prozessor (101), der dazu ausgelegt ist, eine oder mehrere Anweisungen auszuführen; und
einen Speicher (104), in dem die eine oder die mehreren Anweisungen gespeichert sind;
wobei die eine oder die mehreren Anweisungen dazu ausgelegt sind, vom Prozessor geladen und ausgeführt zu werden, um das Verfahren nach einem der Ansprüche 1 bis 2 durchzuführen.

4. Computerlesbares Speichermedium, auf dem ein Computerprogramm gespeichert ist, das Programmanweisungen umfasst, wobei: die Programmanweisungen, wenn sie von einem Prozessor ausgeführt werden, den Prozessor dazu auslegen, das Verfahren nach einem der Ansprüche 1 bis 2 durchzuführen.

**Revendications**

1.  Procédé pour traiter des données multimédia, dans lequel :

les données multimédia comprennent une pluralité de trames multimédia qui sont partitionnées en N couches temporelles et encapsulées dans M pistes, M et N étant chacun un entier positif supérieur à 1 ;
le procédé est exécutable par un dispositif de consommation de contenu, et comprend :

l'acquisition (S501) d'une boîte de description d'une jème piste des M pistes, dans lequel la boîte de description comprend des informations de signalisation de piste temporelle qui sont configurées pour signaler un mode d'encapsulation des N couches temporelles dans les pistes, et comprend des informations de couche temporelle d'une couche temporelle encapsulée dans la jème piste, j étant un entier positif inférieur ou égal à M, et dans lequel les informations de signalisation de piste temporelle comprennent un champ d'identification de pistes temporelles multiples qui est configuré pour signaler le mode d'encapsulation des N couches temporelles dans les pistes, le champ d'identification de pistes temporelles multiples ayant une première valeur indique que la pluralité de trames multimédia des N couches temporelles sont encapsulées dans une pluralité de pistes différentes, et le champ d'identification de pistes temporelles multiples ayant une deuxième valeur indique que la pluralité de trames multimédia des N couches temporelles sont encapsulées dans une seule piste ; et
le décodage (S502) des données multimédia selon les informations de signalisation de piste temporelle, dans lequel les informations de signalisation de piste temporelle comprennent un champ de nombre total de couches temporelles qui est configuré pour signaler un nombre total de couches temporelles encapsulées dans les M pistes,
dans lequel les informations de couche temporelle de la jème piste comprennent un champ de nombre de couches temporelles qui est configuré pour signaler une quantité de couches temporelles encapsulées dans la jème piste,
dans lequel les informations de couche temporelle de la jème piste comprennent :

un champ d'identification de couche temporelle configuré pour signaler une identité d'une ième couche temporelle des couches temporelles qui sont encapsulées dans la jème piste ;
un champ de taux de trame configuré pour signaler un taux de trame cumulé par toutes les trames multimédia sous la ième couche temporelle ; et
des informations de débit binaire configurées pour signaler un débit binaire cumulé par toutes les trames multimédia sous la ième couche temporelle,
dans lequel :

les informations de signalisation de piste temporelle comprennent un champ d'identification de piste de base qui est configuré pour signaler si la jème piste est une piste de base ;
le champ d'identification de piste de base ayant une première valeur indique que la jème piste est la piste de base, et le champ d'identification de piste de base ayant une deuxième valeur indique que la jème piste est une piste non de base ;
des trames multimédia encapsulées dans la piste de base sont décodées indépendamment,
dans lequel les informations de signalisation de piste temporelle comprennent en outre des informations sur une stratégie de combinaison de pistes, et les informations sur la stratégie de combinaison de pistes comprend :

un champ d'identification de piste configuré pour signaler une identité d'une piste qui comprend une partie des couches temporelles ;
un champ de priorité de décodage et de présentation configuré pour signaler si la jème piste a la priorité de décodage et de présentation, dans lequel le champ de priorité de décodage et de présentation ayant une première valeur indique que la jème piste a la priorité de décodage et de présentation, et le champ de priorité de décodage et de présentation ayant une deuxième valeur indique que la jème piste n'a pas la priorité de décodage et de présentation ;
un champ de piste alternative configuré pour signaler si la jème piste est une piste alternative d'une autre piste des M pistes, dans lequel le champ de piste alternative ayant la première valeur indique que la jème piste est la piste alternative d'une autre piste des M pistes, et le champ de piste alternative ayant la deuxième valeur indique que la jème piste n'est la piste alternative d'aucune autre piste des M pistes ; et

un champ d'identification de piste alternative configuré pour signaler une identité de l'autre piste,

dans lequel, dans le cas où la jème piste est une piste non de base, la jème piste comprend en outre une boîte de référence, et la boîte de référence de piste comprend une boîte de type de référence de piste ;

la boîte de type de référence de piste comprend :

un champ d'identification de piste configuré pour stocker une identité d'une piste de base, et un champ d'identification de type référence configuré pour signaler qu'une cible de référence est la piste de base,

dans lequel le décodage des données multimédia selon les informations de signalisation de piste temporelle comprend :

la réservation d'une couche temporelle qui concorde avec une performance de décodage d'un décodeur dans les N couches temporelles selon les informations de signalisation de piste temporelle et la performance de décodage ;

le décodage de trames multimédia de la couche temporelle réservée,

dans lequel les informations de signalisation de piste temporelle comprennent le champ d'identification de pistes temporelles multiples, le champ d'identification de couche temporelle, le champ de taux de trame et les informations de débit binaire qui comprennent le champ de débit binaire inférieur et le champ de débit binaire supérieur ; et

la réservation de la couche temporelle qui concorde avec la performance de décodage du décodeur dans les N couches temporelles selon les informations de signalisation de piste temporelle et la performance de décodage comprend :

l'obtention d'une valeur du champ d'identification de pistes temporelles multiples à partir des informations de signalisation de piste temporelle, dans lequel :

lorsque le champ d'identification de pistes temporelles multiples a la deuxième valeur et qu'il indique que les trames multimédia des N couches temporelles sont encapsulées dans une seule piste ;

l'obtention d'une valeur du champ d'identification de couche temporelle, d'une valeur du champ de taux de trame et de valeurs du champ de débit binaire inférieur et du champ de débit binaire supérieur dans les informations de débit binaire ; et

la réservation de la couche temporelle qui concorde avec la performance de décodage du décodeur dans les N couches temporelles selon la valeur du champ d'identification de couche temporelle, la valeur du champ de taux de trame, les valeurs du champ de débit binaire inférieur et du champ de débit binaire supérieur dans les informations de débit binaire et la performance de décodage,

lorsque le champ d'identification de pistes temporelles multiples a la première valeur et qu'il indique que les trames multimédia des N couches temporelles sont encapsulées dans une pluralité de pistes différentes ;

l'indication de l'encapsulation des trames multimédia des N couches temporelles dans des pistes différentes en réponse au fait que le champ d'identification de pistes temporelles multiples ayant la première valeur ;

l'obtention, à partir d'une piste de base, d'une valeur du champ d'identification de couche temporelle, d'une valeur du champ de taux de trame et de valeurs du champ de débit binaire inférieur et du champ de débit binaire supérieur dans les informations de débit binaire, en réponse au non chevauchement des couches temporelles dans les pistes différentes, dans lequel les trames multimédia encapsulées dans la piste de base sont décodées indépendamment ; et

la réservation de la totalité ou d'une partie des couches temporelles dans une piste qui concordent avec la performance de décodage du décodeur selon la valeur du champ d'identification de couche temporelle, la valeur du champ de taux de trame, la valeur du champ de débit binaire inférieur et du champ de débit binaire supérieur dans les informations de débit binaire et la performance de décodage,

dans lequel les informations de signalisation de piste temporelle comprennent en outre les informations sur la stratégie de combinaison de pistes, et les informations sur la stratégie de combinaison de pistes comprennent le champ d'identification de piste, le champ de priorité de décodage et de présentation, le champ de piste alternative et le champ d'identification de piste alternative, et le procédé comprend en outre :

la lecture de valeurs de champs dans les informations sur la stratégie de combinaison de pistes à partir de la piste de base, dans lequel le champ d'identification de pistes temporelles multiples a les couches temporelles de première valeur et indique que les trames multimédia des N couches temporelles sont encapsulées dans des pistes différentes parmi lesquelles les couches temporelles se chevauchent ; et

la réservation de la totalité ou d'une partie des couches temporelles dans la piste qui concordent avec la performance de décodage du décodeur selon les valeurs des champs dans les informations sur la stratégie de combinaison de pistes et la performance de décodage.

2. Procédé selon la revendication 1, dans lequel les informations de débit binaire comprennent :

un champ de débit binaire inférieur configuré pour signaler les 18 bits inférieurs du débit binaire cumulé par toutes les trames multimédia sous la $i^{ème}$ couche temporelle ; et

un champ de débit binaire supérieur configuré pour signaler les 12 bits supérieurs du débit binaire cumulé par toutes les trames multimédia sous la $i^{ème}$ couche temporelle.

3. Dispositif informatique, comprenant :

un processeur (101) configuré pour exécuter une ou plusieurs instructions ; et

une mémoire (104) stockant les une ou plusieurs instructions ;

dans lequel les une ou plusieurs instructions sont configurées pour être chargées et exécutées par le processeur afin de réaliser le procédé selon l'une des revendications 1 et 2.

4. Support de stockage lisible par ordinateur stockant un programme informatique comprenant des instructions de programme, dans lequel : les instructions de programme, lorsqu'elles sont exécutées par un processeur, configurent le processeur pour réaliser le procédé selon l'une des revendications 1 et 2.

EP 4 354 868 B1

Figure 1

Figure 2

*LCU*: Largest coding unit

*CU*: Coding unit (image block)

Figure 3

Figure 4

Acquire a description box of a $j^{th}$ track in M tracks, where the description box comprises temporal-track signaling information, which is configured to signal a mode of encapsulating the N temporal layers into the tracks and comprises temporal-layer information of a temporal layer encapsulated into the $j^{th}$ track, j is a positive integer, and j ≤ M — S501

Decode the media data according to the temporal-track signaling information — S502

Figure 5

track1: L0

'tlrf'

'tlrf'

track2: L1

track3: L2

Figure 6a

track1: L0

'tlrf'

'tlrf'

track2

L1 | L2 | L1 | L2

track3

L1 | L2 | L1 | L2

Figure 6b

Determine a temporal layer of each media frame in media data according to inter-frame dependency among all media frames to partition the media frames into N temporal layers, where N is a positive integer

S701

Encapsulate the media frames of the N temporal layers into M tracks, and generate a description box of a $j^{th}$ track, where the description box comprises temporal-track signaling information, which is configured to signal a mode of encapsulating the N temporal layers into the tracks and comprises temporal-layer information of a temporal layer encapsulated into the $j^{th}$ track, M and j are positive integers, and $j \leq M$

S702

Figure 7

Figure 8

Figure 9

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112565815 A